(19) Europäisches Patentamt
European Patent Office
Office européen des brevets

(11) EP 4 726 352 A1

(12) EUROPEAN PATENT APPLICATION
published in accordance with Art. 153(4) EPC

(43) Date of publication:
15.04.2026 Bulletin 2026/16

(51) International Patent Classification (IPC):
G01M 13/045 $^{(2019.01)}$   H02K 11/25 $^{(2016.01)}$

(21) Application number: 24845254.2

(52) Cooperative Patent Classification (CPC):
G01M 13/045; H02K 11/25

(22) Date of filing: 18.06.2024

(86) International application number:
PCT/JP2024/021973

(87) International publication number:
WO 2025/022872 (30.01.2025 Gazette 2025/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.07.2023 JP 2023120884

(71) Applicant: Nikkiso Co., Ltd.
Tokyo 150-6022 (JP)

(72) Inventor: KOMORI Chihiro
Higashimurayama-shi, Tokyo 189-8520 (JP)

(74) Representative: Mathys & Squire
The Shard
32 London Bridge Street
London SE1 9SG (GB)

(54) VIBRATION SENSOR UNIT, ROTARY ELECTRIC MACHINE, AND PUMP DEVICE

(57) The vibration sensor unit 5 includes a wire 7 having at least one coil portion 70, a main body 6 made of a magnetic material and disposed inside the coil portion in contact therewith, a power supply 81 causing a constant current to flow through the coil portion, and a vibration detection unit 821 detecting vibration based on a change in an alternating-current component of voltage generated across the wire. A rotary shaft includes a cylindrical outer circumferential surface 322. The body 6 has an annular shape or a partially cut-out annular shape, the shapes along a circumferential direction of the coil portion and allowing the shaft to pass through. A portion of the shaft disposed inside the body is made of a material having at least electrical conductivity or magnetism, and an inner circumferential surface 61 of the body is disposed spaced from the surface 322 of the shaft.

FIG. 2

**Description**

[Technical Field]

The present invention relates to a vibration sensor unit, a rotary electric machine, and a pump apparatus.

[Background Art]

When a pump apparatus is used over an extended period of time, the bearings supporting a rotary shaft of a motor (rotary electric machine) included in the pump apparatus become worn, causing the rotary shaft to vibrate, and such vibration may lead to a failure of the pump apparatus. Accordingly, monitoring of the wear state of the bearings is required in the pump apparatus. In a pump apparatus configured to allow easy disassembly and inspection, the wear state of the bearings can be monitored through regular maintenance. However, in a pump apparatus that is not easy to disassemble and inspect (e.g., canned motor pump, submersible wet-motor pump, submerged pump, etc.), the monitoring of the wear state of the bearings is performed by using an automatic monitoring device or a vibration sensor (for example, see JP 2017-053837 A).

[Citation List]

[Patent Literature]

[PTL 1] JP 2017-053837A

[Summary of Invention]

[Technical Problem]

The vibration sensor disclosed in PTL 1 is a piezoelectric sensor that is mounted at a position parallel to the rotary shaft of a pump apparatus in order to detect acceleration in a direction perpendicular to the rotary shaft.

Among pump apparatuses, some are configured to deliver a high-temperature liquid (e.g., oil) or a cryogenic liquid (e.g., liquefied gas). In such pump apparatuses, not only the vibration sensor but also the signal line and the connector are exposed to the extreme temperature environment. Since a general vibration sensor cannot withstand an extreme temperature environment, a dedicated vibration sensor is used in such pump apparatuses. However, the dedicated vibration sensor is expensive and cannot be used in a temperature environment that exceeds the temperature compensation range of the dedicated vibration sensor. Due to the structure of the vibration sensor, vibration of the rotary shaft must be transmitted to the sensing portion itself that detects the vibration of the rotary shaft. Thus, unintended vibration (other than the vibration of the rotary shaft) may also be detected, which may lead to false detections, and failures of the sensing portion are also likely to occur due to such vibration.

The present invention is directed to providing a vibration sensor unit, a rotary electric machine, and a pump apparatus that are usable over a wide temperature range and are less likely to experience failures caused by vibration.

[Solution to Problem]

A vibration sensor unit according to one aspect of the present invention is a vibration sensor unit that detects vibration of a rotary shaft of a rotary electric machine, the vibration sensor unit including a wire having at least one coil portion wound in a circular coil shape, a main body made of a magnetic material and disposed inside the coil portion in contact with the coil portion, a power supply configured to cause a constant current to flow through the coil portion, and a vibration detection unit that detects the vibration, based on a change in an alternating current component of voltage generated across the wire, in which the rotary shaft includes a cylindrical outer circumferential surface along a rotating direction of the rotary shaft, the main body has an annular shape or a shape in which a portion of the annular shape is cut out, the shapes along a circumferential direction of the coil portion and being formed to allow the rotary shaft to pass through, and, when the rotary shaft is disposed inside the main body so as to rotate in the circumferential direction of the coil portion, a portion of the rotary shaft disposed inside the main body is made of a material having at least electrical conductivity or magnetism, and an inner circumferential surface of the main body is disposed spaced apart from the outer circumferential surface of the rotary shaft.

A rotary electric machine according to one aspect of the present invention is a rotary electric machine including a rotor, a stator that accommodates the rotor and causes the rotor to rotate, a rotary shaft that rotates together with the rotor, bearings that support the rotary shaft, and a vibration sensor unit that detects vibration of the rotary shaft, in which the vibration sensor unit includes a wire having at least one coil portion wound in a circular coil shape, a main body made of a magnetic material and disposed inside the coil portion in contact with the coil portion, a power supply configured to cause a constant current to flow through the coil portion, and a vibration detection unit that detects the vibration, based on a change in an alternating current component of voltage generated across the wire, in which the rotary shaft includes a cylindrical outer circumferential surface along a rotating direction of the rotary shaft, the main body has an annular shape or a shape in which a portion of the annular shape is cut out, the shapes along a circumferential direction of the coil portion and being formed to allow the rotary shaft to pass through, and, when the rotary shaft is disposed inside the main body so as to rotate in the circumferential direction of the coil portion, a portion of the rotary shaft disposed inside the main body is made of a material having at least electrical conductivity or magnetism, and an inner circumferential surface of the main body is disposed spaced apart from the outer circumferential surface of the rotary shaft.

A pump apparatus according to one aspect of the present invention is a pump apparatus including an impeller and the rotary electric machine according to the one aspect described above that causes the impeller to rotate.

[Advantageous Effects of Invention]

According to the present invention, the vibration sensor unit, the rotary electric machine, and the pump apparatus that are usable over a wide temperature range and are less likely to experience failures caused by vibration can be provided.

[Brief Description of Drawings]

[Fig. 1] Fig. 1 is a schematic longitudinal sectional view of a pump apparatus illustrating an embodiment of the pump apparatus according to the present invention.
[Fig. 2] Fig. 2 is a schematic rear view of a partial configuration of a vibration sensor unit included in the pump apparatus of Fig. 1, as viewed in the direction of arrow A in Fig. 1.
[Fig. 3] Fig. 3 is a schematic longitudinal sectional view of the configuration illustrated in Fig. 2, taken along line B-B in Fig. 2.
[Fig. 4] Fig. 4 is a circuit configuration diagram of the vibration sensor unit included in the pump apparatus of Fig. 1.
[Fig. 5] Fig. 5A is a schematic diagram illustrating an example of radial vibration of a rotary shaft included in the pump apparatus of Fig. 1, and Fig. 5B is a schematic diagram illustrating an example of thrust vibration of the rotary shaft.
[Fig. 6] Fig. 6 is a schematic longitudinal sectional view of a pump apparatus illustrating another embodiment of the pump apparatus according to the present invention.
[Fig. 7] Fig. 7 is a schematic rear view of a partial configuration of a vibration sensor unit included in the pump apparatus of Fig. 6, as viewed in the direction of arrow C in Fig. 6.
[Fig. 8] Fig. 8 is a schematic longitudinal sectional view of the configuration illustrated in Fig. 2, taken along line D-D in Fig. 2.
[Fig. 9] Fig. 9 is a circuit configuration diagram of the vibration sensor unit included in the pump apparatus of Fig. 6.

[Fig. 10] Fig. 10 is a circuit configuration diagram illustrating a first modification example of the pump apparatus according to the present invention.
[Fig. 11] Fig. 11 is a schematic longitudinal sectional view of a pump apparatus illustrating a second modification example of the pump apparatus according to the present invention.
[Fig. 12] Fig. 12 is a schematic rear view of a pump apparatus illustrating a third modification example of the pump apparatus according to the present invention.
[Fig. 13] Fig. 13 is a schematic longitudinal sectional view of a main body and a wire included in the pump apparatus of Fig. 12, taken along line E-E in Fig. 12.
[Fig. 14] Fig. 14 is a circuit configuration diagram illustrating a fourth modification example of the pump apparatus according to the present invention.
[Fig. 15] Fig. 15 is a schematic rear view of a pump apparatus illustrating a fifth modification example of the pump apparatus according to the present invention.
[Fig. 16] Fig. 16 is a schematic rear view of a pump apparatus illustrating a sixth modification example of the pump apparatus according to the present invention.
[Fig. 17] Fig. 17 is a circuit configuration diagram illustrating a seventh modification example of the pump apparatus according to the present invention.
[Fig. 18] Fig. 18 is a functional block diagram illustrating an eighth modification example of the pump apparatus according to the present invention.

[Description of Embodiments]

Embodiments of a vibration sensor unit, a rotary electric machine, and a pump apparatus according to the present invention will be described below. In the following description, each drawing is referred to as appropriate. In the drawings, the same members and components are indicated with the same reference signs, and repetitive description thereof will be omitted. Further, the dimensional ratios of the components may be exaggerated for convenience of description and are not limited to the ratios illustrated in the drawings.

In the following description, a wet motor pump (hereinafter simply referred to as a "pump") in which a pump unit and a motor unit are integrally configured is described as an example of the pump apparatus according to the present invention. The pump is a sealless motor pump having a structure in which pumped liquid does not leak, and has a structure in which the entire pump is submerged in the pumped liquid and a portion of the pumped liquid is also introduced into the motor unit.

Pump Apparatus (1)

Configuration of Pump Apparatus (1)

First, an embodiment of the pump apparatus according to the present invention (hereinafter simply referred to as "pump apparatus") will be described below.

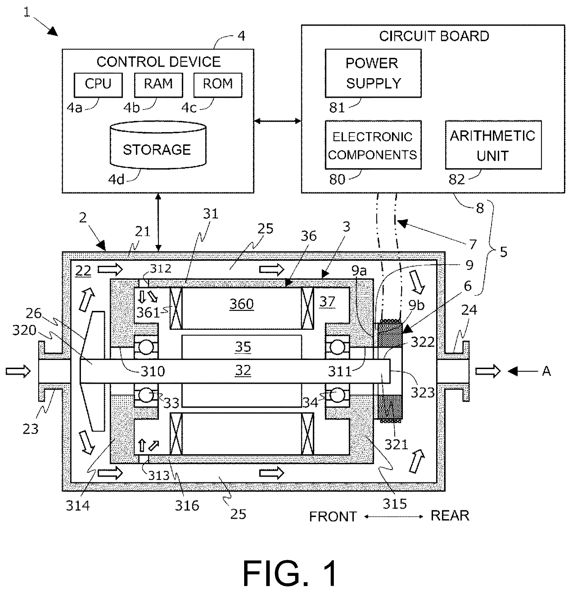

Fig. 1 is a schematic longitudinal sectional view of the pump apparatus illustrating the embodiment of the pump apparatus. The figure illustrates the flow of pumped liquid with outlined arrows. The figure illustrates the pump apparatus 1 in a simplified manner for convenience of description.

The pump apparatus 1 is used for delivering pumped liquid (e.g., water). The pump apparatus 1 includes a pump unit 2, a motor unit 3, a control device 4, and the vibration sensor unit 5.

Note that, in the present invention, the pumped liquid is not limited to water. That is, for example, the pumped liquid may be high-temperature oil or a cryogenic liquefied gas such as liquefied natural gas or liquefied hydrogen.

In the following description, the "forward direction" is a direction in which an impeller 26 to be described later is positioned with respect to the motor unit 3, and the "rearward direction" is an opposite direction to the forward direction. The "downward direction" is the direction of gravity, and the "upward direction" is the opposite direction of downward.

The pump unit 2 sucks in and discharges the pumped liquid. The pump unit 2 includes a housing 21, a pump chamber 22, a suction pipe 23, a discharge pipe 24, an internal flow passage 25, and the impeller 26.

The housing 21 accommodates the motor unit 3 and defines the pump chamber 22 in which the impeller 26 is accommodated and the internal flow passage 25. The housing 21 is made of, for example, stainless steel. A front end portion of the housing 21 extends cylindrically forward and forms the suction pipe 23. A rear end portion of the housing 21 extends cylindrically rearward and forms the discharge pipe 24. The internal flow passage 25 is defined between the housing 21 and the motor unit 3 (i.e., a housing 31 to be described later) along the front-rear direction. The internal flow passage 25 communicates with the pump chamber 22 and the discharge pipe 24. That is, the housing 21 forms the pump chamber 22, the suction pipe 23, the discharge pipe 24, and the internal flow passage 25.

The suction pipe 23 is a flow passage for the pumped liquid to be sucked into the pump chamber 22.

The discharge pipe 24 is a flow passage for the pumped liquid to be discharged from the pump chamber 22.

The internal flow passage 25 is a flow passage through which the pumped liquid sucked from the suction pipe 23 into the pump chamber 22 is guided to the discharge pipe 24. The internal flow passage 25 is defined between the housing 21 and the housing 31 to be described later.

The impeller 26 is mounted to a front end portion 320 of a rotary shaft 32 to be described later and rotates with the rotation of the rotary shaft 32. That is, the impeller 26 rotates with the rotation of the motor unit 3. The impeller 26 rotates and thus causes the pumped liquid sucked from the suction pipe 23 into the pump chamber 22 to be discharged through the internal flow passage 25 and the discharge pipe 24.

The motor unit 3 is driven under predetermined driving conditions and rotates the impeller 26 in the pump chamber 22. The motor unit 3 is accommodated in the housing 21. The motor unit 3 is an example of the rotary electric motor according to the present invention. The motor unit 3 includes the housing 31, the rotary shaft 32, two bearings 33 and 34, a rotor 35, a stator 36, and a motor chamber 37.

The housing 31 defines the motor chamber 37 that accommodates the rotary shaft 32, the bearings 33 and 34, the rotor 35, and the stator 36. The housing 31 is made of, for example, stainless steel such as SUS304. The housing 31 includes a front opening 310, a rear opening 311, and liquid introduction ports 312 and 313.

The front opening 310 is a hole extending through a front wall 314 of the housing 31 in the front-rear direction. The rear opening 311 is a hole extending through a rear wall 315 of the housing 31 in the front-rear direction.

The liquid introduction ports 312 and 313 are holes extending through a circumferential wall 316 of the housing 31. The liquid introduction ports 312 and 313 communicate with the internal flow passage 25 and the motor chamber 37 and allow the pumped liquid to be introduced into the motor chamber 37. The liquid introduction ports 312 and 313 are disposed in a front portion of the circumferential wall 316, for example.

Note that, in the present invention, the liquid introduction ports 312 and 313 may be disposed in a rear portion or in a central portion of the circumferential wall 316.

In the present invention, the number of liquid introduction ports 312 and 313 may be any number that allows the pumped liquid to be introduced into the motor chamber 37 and is not limited to "two".

The rotary shaft 32 rotates with the rotation of the rotor 35 and transmits rotational power to the impeller 26. The rotary shaft 32 has a solid cylindrical shape, for example. The rotary shaft 32 is made of metal having electrical conductivity and magnetism. That is, the rotary shaft 32 is made of a magnetic material having electrical conductivity.

In the present description, the "axial direction" is a direction along the central axis of the rotary shaft 32 and corresponds to the front-rear direction. The "rotational direction" is a rotational direction of the rotary shaft 32 and corresponds to a circumferential direction of the rotary shaft 32.

The rotary shaft 32 extends through the rotor 35 and is fixed to the rotor 35. The rotary shaft 32 is rotatably supported by the bearings 33 and 34 in a state where the axial direction is along the front-rear direction. The rotary shaft 32 extends through the front opening 310 and the rear opening 311 of the housing 31. A front end portion 320 of the rotary shaft 32 projects into the pump chamber 22. A rear end portion 321 of the rotary shaft 32 projects into the internal flow passage 25 in a rear portion of the housing 31. The rotary shaft 32 includes an outer circumferential surface 322 and a rear end surface 323. The outer circumferential surface 322 has a cylindrical shape along the circumferential direction (i.e., the rotational direction) of the rotary shaft 32. The rear end surface 323 is planar and parallel to lateral and vertical directions, and is an end surface perpendicular to the outer circumferential surface 322.

The bearings 33 and 34 are mounted to the housing 31 and rotatably support the rotary shaft 32. The bearings 33 and 34 are known ball bearings, for example. The bearing 33 supports a front portion of the rotary shaft 32, and the bearing 34 supports a rear portion of the rotary shaft 32.

The rotor 35 rotates by a rotating magnetic field generated in the stator 36. The rotor 35 has a hollow cylindrical shape. The rotor 35 is accommodated in the stator 36. When the rotor 35 rotates, the rotary shaft 32 rotates together with the rotor 35.

The stator 36 generates the rotating magnetic field that causes the rotor 35 to rotate. The stator 36 includes a hollow-cylindrical stator core 360 and a plurality of motor windings 361. In a radial direction of the rotary shaft 32, an inner circumferential surface of the stator core 360 directly faces an outer circumferential surface of the rotor 35.

The control device 4 controls the overall operation of the pump apparatus 1. The control device 4 includes a processor such as a central processing unit (CPU) 4a, a volatile memory such as a random access memory (RAM) 4b that functions as a work area for the CPU 4a, a non-volatile memory such as a read only memory (ROM) 4c that stores various types of operation information including operation programs, and a storage 4d such as a flash memory that stores various detection information including detection results to be described later.

The vibration sensor unit 5 detects vibration of the rotary shaft 32 in the motor unit 3. A configuration of the vibration sensor unit 5 will be described later.

Vibration Sensor Unit (1)

Configuration of Vibration Sensor Unit (1)

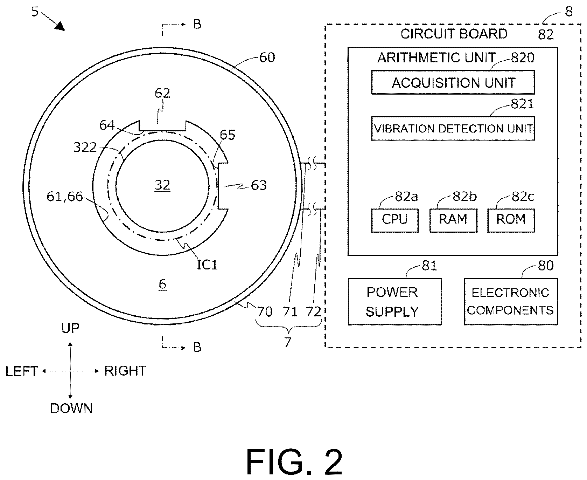

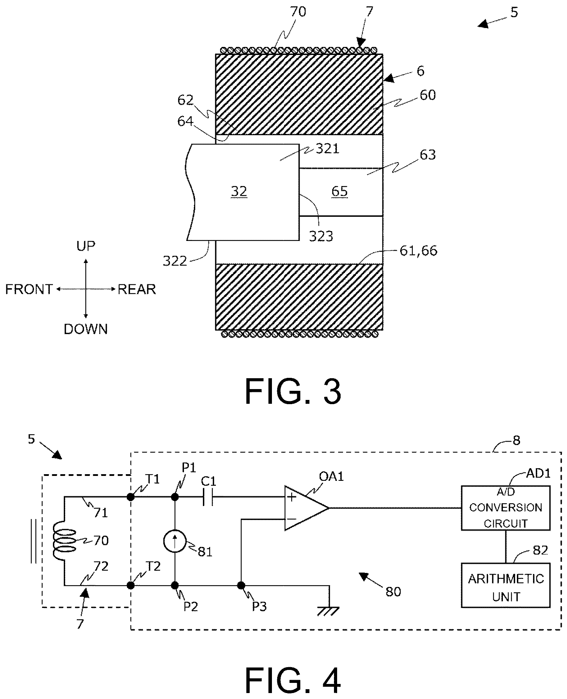

Fig. 2 is a schematic rear view of a partial configuration of the vibration sensor unit 5 (a main body 6 and a wire 7 to be described later), as viewed in the direction of arrow A in Fig. 1. The figure illustrates a schematic rear view of the main body 6 and the wire 7 and a functional block diagram of the vibration sensor unit 5. The figure also illustrates the rotary shaft 32 for convenience of description. Fig. 3 is a schematic longitudinal sectional view of the configuration (the main body 6 and the wire 7) illustrated in Fig. 2, taken along line B-B in Fig. 2. The figure also illustrates the rotary shaft 32 in a non-sectional view for convenience of description. In the following description, Fig. 1 will be referred to as appropriate.

The vibration sensor unit 5 includes the main body 6, the wire 7, a circuit board 8, and a spacer 9. The main body 6 and the wire 7 constitute a sensing portion that generates a signal (an induced current to be described later) corresponding to the vibration of the rotary shaft 32. The circuit board 8 constitutes a signal processing unit that causes a constant current to flow through the sensing portion and performs predetermined signal processing on a signal generated by the sensing portion, thereby detecting the vibration of the rotary shaft 32.

The main body 6 functions as a so-called yoke that serves as a path for magnetic flux generated in a magnetic field around the wire 7 when a constant current from a power supply 81 flows through the wire 7. The main body 6 is made of metal having magnetism (e.g., iron, etc.,). That is, the main body 6 is made of a magnetic material. The main body 6 has a circular annular shape when viewed in the front-rear direction. The main body 6 includes an outer circumferential surface 60, an inner circumferential surface 61, and two projecting portions 62 and 63.

Note that, in the present invention, the main body 6 may be made of magnetic alloy (e.g., low-carbon steel, SUS430, etc.,).

The outer circumferential surface 60 has a cylindrical shape. The inner circumferential surface 61 has a substantially cylindrical shape.

A portion of the inner circumferential surface 61 (an upper end portion in the present embodiment) protrudes inward (downward) in the radial direction of the main body 6 and forms the protruding portion 62. Another portion of the inner circumferential surface 61 (a right end portion in the present embodiment) protrudes inward (leftward) in the radial direction of the main body 6 and forms the protruding portion 63. That is, when viewed from the rear, the protruding portion 63 is disposed at a position circumferentially offset by 90 degrees clockwise from the protruding portion 62 of the main body 6. In other words, in the circumferential direction of the main body 6, the protruding portions 62 and 63 are disposed at positions spaced 90 degrees apart from each other. The shapes of the protruding portions 62 and 63 are common except that the protruding directions are different. An end surface (a lower end surface) 64 of the protruding portion 62 is planar and parallel to the front-rear direction and the lateral direction, and constitutes a portion of the inner circumferential surface 61. An end surface (a left end surface) 65 of the protruding portion 63 is planar and parallel to the front-rear direction and the vertical direction, and constitutes a portion of the inner circumferential surface 61. That is, the inner circumferential surface 61 includes a surface (hereinafter referred to as "first surface 66" ) other than the end surfaces 64 and 65 and the protruding portions 62 and 63. The end surfaces 64 and 65 are examples of a second surface in the present invention.

The radius of an inscribed circle IC1 of the end surfaces 64 and 65 is larger than the radius of the rotary shaft 32 and smaller than the radius of the first surface 66. The radius of the first surface 66 is larger than the radius of the rotary shaft 32. That is, the diameter of the inscribed circle IC1 is larger than the diameter (i.e., the outer diameter) of the rotary shaft 32 and smaller than the inner diameter of the first surface 66. In other words, the inner circumferential surface 61 includes the first surface 66 having a radius larger than the radius of the rotary shaft 32, and the end surfaces 64 and 65 each having a distance from the center of curvature of the first surface 66 smaller than the radius of the first surface 66. Thus, the rotary shaft 32 is insertable into the main body 6. When viewed from the rear, the inscribed circle IC1 is disposed concentrically with the outer circumferential surface 60 and the first surface 66. The radius of the first surface 66 is an example of a first radius according to the present invention.

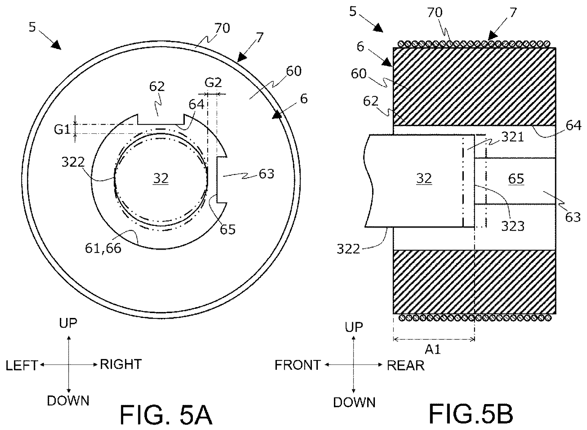

The main body 6 is disposed rearward of the housing 31 and is mounted on an outer surface of the rear wall 315 of the housing 31 via the spacer 9 with bolts (not illustrated) made of a non-magnetic material (e.g., SUS304), for example. The rear end portion 321 and the rear end surface 323 of the rotary shaft 32 are disposed inside the main body 6. When viewed from the rear, the outer circumferential surface 60 (the inscribed circle IC1, the first surface 66) of the main body 6 is disposed concentrically with the outer circumferential surface 322 of the rotary shaft 32. That is, the rotary shaft 32 is disposed inside the main body 6 so as to rotate in the circumferential direction of the main body 6 (the coil portion 70). In the front-rear direction, the rear end surface 323 of the rotary shaft 32 is disposed at the center of the main body 6. That is, the front half portion of the inner circumferential surface 61 (the end surfaces 64 and 65, the first surface 66) of the main body 6 faces the outer circumferential surface 322 of the rear end portion 321 of the rotary shaft 32 and is disposed so as to be spaced apart from the outer circumferential surface 322. In other words, in the radial direction of the rotary shaft 32, the main body 6 (the protruding portions 62 and 63) is disposed outward of the rear end portion 321 of the rotary shaft 32. In the circumferential direction of the rotary shaft 32, the main body 6 covers the entire circumference of the outer circumferential surface 322 of the rear end portion 321 of the rotary shaft 32. When the bearings 33 and 34 are not worn, a gap between the outer circumferential surface 322 and the end surface 64 (hereinafter referred to as "gap G1", see Fig. 5, the same applies hereinafter) is equal to a gap between the outer circumferential surface 322 and the end surface 65 (hereinafter referred to as "gap G2", see Fig. 5, the same applies hereinafter).

The wire 7 generates magnetic flux when a current supplied from the power source 81 flows through the wire 7, and the magnetic flux is used to detect vibration of the rotary shaft 32. The wire 7 is a copper wire coated with a polyimide resin, for example. The wire 7 includes the coil portion 70 and two lead portions 71 and 72.

A central portion of the wire 7 is wound in a coil shape around the outer circumferential surface 60 of the main body 6 and forms the coil portion 70. That is, the main body 6 has an annular shape along the circumferential direction of the coil portion 70. The main body 6 is disposed inside the coil portion 70 in the radial direction of the coil portion 70 and in contact with the coil portion 70. When viewed from the rear, the coil portion 70 is disposed concentrically with the outer circumferential surface 322 of the rotary shaft 32. In other words, the rotary shaft 32 is disposed inside the main body 6 and the coil portion 70 so as to rotate in the circumferential direction of the coil portion 70. In the front-rear direction, the length of the coil portion 70 is shorter than the length of the main body 6.

Note that, in the present invention, the length of the coil portion 70 in the front-rear direction may be the same as the length of the main body 6.

A portion of the wire 7 excluding the coil portion 70 forms the lead portions 71 and 72. The lead portions 71 and 72 are covered with an insulating tube or the like, for example. The lead portions 71 and 72 are led out of the housing 21 together with wiring (not illustrated) of the motor unit 3, for example, via a known airtight and pressure-resistant terminal block.

Fig. 4 is a circuit configuration diagram of the vibration sensor unit 5. In the following description, Figs. 1 and 2 will be referred to as appropriate.

The circuit board 8 is a known printed circuit board on which electronic components 80 (a capacitor C1, an operational amplifier OA1, and an A/D conversion circuit AD1), the power source 81, and an arithmetic unit 82 are mounted. That is, the vibration sensor unit 5 also includes the electronic components 80, the power supply 81, and the arithmetic unit 82. The circuit board 8 includes a terminal T1 connected to the lead portion 71 and a terminal T2 connected to the lead portion 72.

A non-inverting input of the operational amplifier OA1 is connected to the terminal T1, and an inverting input of the operational amplifier OA1 is connected to the terminal T2 via a connection point P3 and is grounded. One end of the power source 81 is connected between the terminal T1 (the lead portion 71) and the non-inverting input via a connection point P1. The other end of the power source 81 is connected between the terminal T2 (the lead portion 72) and the inverting input via a connection point P2. The capacitor C1 is connected between the one end (the connection point P1) of the power source 81 and the non-inverting input. An output terminal of the operational amplifier OA1 is connected to the arithmetic unit 82 via the A/D conversion circuit AD1.

The power supply 81 is a known constant-current DC power supply circuit that causes a constant-current DC to flow through the coil portion 70.

In the following description, Fig. 2 will be mainly referred to. The arithmetic unit 82 detects vibration of the rotary shaft 32, based on changes in the alternating current component of the voltage generated in the coil portion 70 in response to the vibration of the rotary shaft 32. The arithmetic unit 82 includes, for example, a processor such as the CPU82a, a volatile memory such as a RAM82b that functions as a work area for the CPU82a, and a non-volatile memory such as a ROM82c that stores various types of operation information such as a detection program. The arithmetic unit 82 includes an acquisition unit 820 and a vibration detection unit 821.

In the arithmetic unit 82, a detection program for detecting the vibration of the rotary shaft 32 operates, and the detection program cooperates with hardware resources of the vibration sensor unit 5 and detects the vibration of the rotary shaft 32. By causing the processor (the CPU82a) included in the arithmetic unit 82 to execute the detection program, the detection program enables the processor to function as the acquisition unit 820 and the vibration detection unit 821, thereby allowing the processor to execute the vibration detection method. Similarly, by causing the computer to execute the detection program, the detection program enables the computer to function as the arithmetic unit 82.

The acquisition unit 820 acquires a signal (a vibration signal to be described later) converted into a digital signal by the A/D conversion circuit AD1. A specific operation of the acquisition unit 820 will be described later.

The vibration detection unit 821 detects vibration of the rotary shaft 32, based on the signal acquired by the acquisition unit 820. A specific operation of the vibration detection unit 821 will be described later.

The spacer 9 assists in attaching the main body 6 to the housing 31 and also prevents leakage of magnetic flux from the main body 6 to the housing 31 when the housing 31 is made of a magnetic material. The spacer 9 is made of a non-magnetic material such as SUS304, for example. The spacer 9 has a ring plate shape. A front surface 9a of the spacer 9 has unevenness so as to fit the shape of a rear surface of the housing 31, and a rear surface 9b of the spacer 9 has a planer shape, for example.

Note that, in the present invention, when the housing 31 is made of a non-magnetic material, the vibration sensor unit 5 need not include the spacer 9. In this case, it is preferable that a portion of the outer surface of the rear wall 315 of the housing 31, on which the main body 6 abuts, has a planar shape.

Principle of Vibration Detection

Next, a principle for detecting vibration of the rotary shaft 32 in the vibration sensor unit 5 will be described. In the present embodiment, the vibration sensor unit 5 detects vibration of the rotary shaft 32 in the radial direction of the rotary shaft 32 (hereinafter referred to as "radial vibration") and vibration of the rotary shaft 32 in the axial direction (thrust direction) of the rotary shaft 32 (hereinafter referred to as "thrust vibration"). In the following description, Figs. 1 to 4 are referred to as appropriate.

Fig. 5A is a schematic diagram illustrating an example of the radial vibration of the rotary shaft 32, and Fig. 5B is a schematic longitudinal sectional view of the rotary shaft 32 illustrating an example of the thrust vibration of the rotary shaft 32. The figure illustrates the vibration of the rotary shaft 32 with two dot chain lines.

When direct current from the power supply 81 flows through the wire 7, a magnetic field is formed (a magnetic field is generated) around the coil portion 70. As described above, the main body 6 is made of a magnetic material, and thus most of the magnetic flux in this magnetic field passes through the main body 6 in a concentrated manner. A portion of the magnetic flux also passes through the rotary shaft 32 via the gaps G1 and G2 between the rotary shaft 32 and the protruding portions 62 and 63. When the rotary shaft 32 does not vibrate in the radial direction, the amount of magnetic flux passing through the rotary shaft 32 remains almost unchanged. In general, when the magnetic flux passing through a coil having "N" turns changes by "ΔΦ" during a predetermined time "Δt", induced electromotive force "V" generated in the coil is represented by the following equation (1).

$$V = -N \times (\Delta\Phi/\Delta t) \quad (1)$$

That is, the induced electromotive force (V) increases as the rate of change (increase or decrease) of the magnetic flux becomes steeper, decreases as the rate of change becomes gentler, and becomes zero when there is no change in the magnetic flux. Accordingly, when the rotary shaft 32 does not vibrate in the radial direction, the induced electromotive force (V) generated in the coil portion 70 is approximately zero.

As described above, in the circumferential direction of the rotary shaft 32, the main body 6 covers the entire circumference of the rear end portion 321 of the rotary shaft 32. In the circumferential direction of the rotary shaft 32, the protruding portions 62 and 63 are disposed at positions spaced 90 degrees apart from each other. Accordingly, when the rotary shaft 32 vibrates in the radial direction, the rotary shaft 32 repeatedly approaches and moves away from the protruding portion 62 and/or the protruding portion 63 within an extremely short period of time. That is, the gaps G1 and/or G2 (hereinafter simply referred to as "gap G1, G2") increases or decreases (changes) within an extremely short period of time. In this case, the ease of passage of magnetic flux (i.e., magnetic permeance) in the gaps G1 and G2 changes, and the inductance of the coil portion 70 changes in accordance with the magnetic permeance. That is, the inductance of the coil portion 70 changes in accordance with an increase or decrease in the gaps G1 and G2. That is, for example, as the rotary shaft 32 approaches the protruding portions 62 and 63 (i.e., when the gaps G1 and G2 decrease), the magnetic flux passes more easily through the gaps G1 and G2. In this case, the magnetic flux passed through the rotary shaft 32 increases, and the magnetic flux linked to the coil portion 70 changes (increases). In contrast, for example, as the rotary shaft 32 moves away from the protruding portions 62 and 63 (i.e., when the gaps G1 and G2 increase), the magnetic flux is less likely to pass through the gaps G1 and G2. In this case, the magnetic flux passed through the rotary shaft 32 decreases, and the magnetic flux linked to the coil portion 70 changes (decreases). In accordance with a time variation in the magnetic permeance of the magnetic flux, the induced electromotive force generated in the coil portion 70 changes, and an induced current corresponding to the induced electromotive force flows through the coil portion 70.

As represented in the equation (1), the magnitude of the induced electromotive force corresponds to (is proportional to) the rate of change of the magnetic flux. That is, the induced electromotive force increases as the rate of change of the magnetic flux increases, and the induced electromotive force decreases as the rate of change of the magnetic flux decreases. In other words, the voltage of the induced current flowing through the coil portion 70 due to generation of the induced electromotive force increases as the velocity of the displacement (the velocity of the vibration) of the rotary shaft 32, i.e., the magnitude of the displacement (vibration) per unit time, increases, and decreases as the velocity of the displacement (the velocity of the vibration) of the rotary shaft 32, i.e., the magnitude of the displacement (vibration) per unit time decreases. As represented in the equation (1), the induced electromotive force is generated in a direction that cancels the change in the magnetic flux. Thus, the polarity of the induced electromotive force alternates with a period corresponding to the period of the radial vibration. Accordingly, the voltage of the induced current includes an alternating current component corresponding to the radial vibration, and the voltage value indicates the magnitude of the radial vibration. In other words, the induced current generated in the coil portion 70 by the radial vibration functions as a vibration signal indicating the velocity (the change in the alternating current component) of the radial vibration. In this case, a DC voltage obtained by multiplying the DC current by the resistance of the wire 7 is also generated across both ends of the wire 7 (across the terminals T1 and T2), but this DC voltage is not transmitted to the operational amplifier OA1 due to the capacitor C1.

Next, when the rotary shaft 32 does not vibrate in the thrust direction, the area where the outer circumferential surface 322 of the rotary shaft 32 faces the inner circumferential surface 61 of the main body 6 (hereinafter referred to as "opposing area A1") is constant. In contrast, when the rotary shaft 32 vibrates in the thrust direction, the rotary shaft 32 is displaced in the front-rear direction in an extremely short time, and the rear end surface 323 of the rotary shaft 32 is displaced (moves forward and rearward) in the front-rear direction inside the main body 6. In this case, the opposing area A1 increases and decreases depending on the displacement of the rotary shaft 32 (the rear end surface 323). That is, for example, when the rotary shaft 32 is displaced rearward, the opposing area A1 increases, and when the rotary shaft 32 is displaced forward, the opposing area A1 decreases. The magnetic flux passing through the rotary shaft 32 varies depending on an increase and decrease in the opposing area A1. That is, for example, as the opposing area A1 increases, the magnetic flux passed through the rotary shaft 32 increases, and the magnetic flux linked to the coil portion 70 changes (increases). In contrast, for example, as the opposing area A1 decreases, the magnetic flux passed through the rotary shaft 32 decreases, and the magnetic flux linked to the coil portion 70 changes (decreases). The induced electromotive force generated in the coil portion 70 varies depending on the time variation of the opposing area A1, and a current (a vibration signal) corresponding to the induced electromotive force flows through the coil portion 70. As a result, the induced current generated in the coil portion 70 by the thrust vibration functions as a vibration signal indicating the velocity (the change in the alternating current component) of the thrust vibration, similarly to the case of the radial vibration.

In this way, the vibration sensor unit 5 does not detect vibration based on a physical strain (displacement) of the sensing portion caused by vibration, but detects vibration without contact with a vibration source based on an electrical displacement using electromagnetic induction. Thus, in the vibration sensor unit 5, the transmission of the vibration of the rotary shaft 32 to the sensing portion itself is not required. Accordingly, the vibration sensor unit 5 is less likely to detect unintended vibration (vibration other than the vibration of the rotary shaft 32), and false detections caused by the unintended vibration and failures of the sensing portion caused by the vibration are also less likely to occur. The sensing portion is composed only of the coil (the coil portion 70) and the yoke (the main body 6). Thus, the sensing portion is usable over a wide temperature range from cryogenic temperatures to high temperatures and is less likely to experience failures.

The main body 6 includes the protruding portions 62 and 63, and thus the induced electromotive force is easily generated in the coil portion 70 when the rotary shaft 32 vibrates in such a way as to approach the end surfaces 64 and 65. Accordingly, the vibration detection sensitivity of the vibration detection unit 821 is improved as compared with the vibration detection sensitivity in a case where the main body 6 does not include the protruding portions 62 and 63.

Note that, in the present invention, both the radial vibration and the thrust vibration are detected based on a change in the alternating current component of the voltage of the induced electromotive force generated in the coil portion 70. Thus, the vibration sensor unit 5 is capable of detecting the radial vibration and the thrust vibration, but it is not easy to determine whether the vibration is the radial vibration or the thrust vibration.

Operation of Pump Apparatus (1)

Next, operations of the pump apparatus 1 will be described below with a focus on operations of the vibration sensor unit 5. In the following description, Figs. 1 to 5 will be referred to as appropriate.

When the pump apparatus 1 is in operation, the rotary shaft 32 rotates together with the rotation of the rotor 35. The power supply 81 supplies a constant-current DC to the wire 7 (the coil portion 70). When the bearings 33 and 34 are not worn and the rotary shaft 32 does not vibrate, the induced electromotive force is not generated in the coil portion 70.

Next, when the bearings 33 and/or 34 are worn and the rotary shaft 32 vibrates (radial vibration and/or thrust vibration), the induced electromotive force corresponding to the vibration is generated in the coil portion 70, and an induced current (a vibration signal) flows through the coil portion 70. In this case, the capacitor C1 blocks the flow of the direct current (the constant current) from the power supply 81 into the operational amplifier OA1. As a result, only the vibration signal flows into the operational amplifier OA1, and the operational amplifier OA1 amplifies and outputs a change in the alternating current component of the voltage included in the vibration signal. The output from the operational amplifiers OA1, i.e., the amplified vibration signal, is converted into a digital signal in the A/D conversion circuit AD1, input to the arithmetic unit 82, and acquired by the acquisition unit 820.

The vibration detection unit 821 detects the vibration of the rotary shaft 32, based on the vibration signal (the signal indicating the change in the alternating current component of the voltage) acquired by the acquisition unit 820. Specifically, the vibration detection unit 821 acquires the rate of change of the voltage, based on the vibration signal over a predetermined period (e.g., several seconds). As described above, the magnitude of the induced electromotive force corresponds to the rate of change of the magnetic flux, i.e., the rate of change of the displacement of the rotary shaft 32. Thus, the vibration detection unit 821 can indirectly acquire the rate of change of the displacement of the rotary shaft 32 by acquiring the rate of change of the voltage. As described above, the induced electromotive force is not generated unless the rotary shaft 32 vibrates. Thus, the vibration detection unit 821 is capable of determining the presence or absence of vibration of the rotary shaft 32 and detecting the vibration by determining whether the voltage value of the vibration signal is equal to or greater than a predetermined threshold value, for example.

Then, the vibration detection unit 821 acquires vibration information (the period of vibration, acceleration, and amount of displacement) of the rotary shaft 32, based on the acquired rate of change of the voltage. Specifically, the vibration detection unit 821 acquires the period of vibration of the rotary shaft 32 by performing known FFT processing and filtering processing to the rate of change of the voltage, for example. The vibration detection unit 821 acquires acceleration of vibration of the rotary shaft 32 by differentiating the rate of change of the voltage with respect to time by using known differentiation processing, for example. The vibration detection unit 821 acquires the amount of displacement of vibration of the rotary shaft 32 by integrating the rate of change of the voltage with respect to time by using known integration processing, for example. The acquired vibration information is stored, for example, in the storage 4d.

Herein, for example, when the cause of vibration of the rotary shaft 32 is a breakage of a part of a ball of the bearing 33 or 34, the rotary shaft 32 vibrates with a short period corresponding to the position of the broken ball. When the cause of vibration of the rotary shaft 32 is normal wear of the bearing 33 or 34, the rotary shaft 32 vibrates with a longer period than the period at the time of breakage of the ball. In this way, the period of vibration of the rotary shaft 32 is information that may contribute to the prediction of a cause of the vibration of the rotary shaft 32. Accordingly, when a correlation between a period of vibration and a cause of vibration is identified in advance, the pump apparatus 1 is capable of identifying the cause of vibration of the rotary shaft 32, based on the period of vibration of the rotary shaft 32.

The pump apparatus 1 is capable of estimating whether the cause of vibration of the rotary shaft 32 is damage of the bearing 33 or 34, in which the acceleration tends to be large, or wear of the bearing 33 or 34, in which the acceleration tends to be small, based on the acceleration of the vibration of the rotary shaft 32.

The pump apparatus 1 is capable of estimating the amount of wear of the bearings 33 and 34, based on the amount of displacement of vibration of the rotary shaft 32. Accordingly, the pump apparatus 1 is capable of displaying the amount of wear of the bearings 33 and 34 by using a display device (not illustrated) such as an indicator, for example.

The main body 6 is disposed substantially concentrically with the stator 36 (the stator core 360 and the motor winding 361) when viewed in the front-rear direction (i.e., when viewed in the axial direction of the rotary shaft 32) and is disposed rearward of the stator 36 in the front-rear direction. In this configuration, even when magnetic flux leakage (rotational magnetic flux) occurs from the rotating magnetic field of the stator 36, the leaked magnetic flux rotates in the circumferential direction of the rotary shaft 32, and the main body 6 also has an annular shape along the same circumferential direction. Thus, in the circumferential direction, the total amount of the leaked magnetic flux crossing the coil portion 70 does not change, and the coil portion 70 is less likely to generate induced electromotive force based on the leakage (noise based on the leakage is less likely to occur).

Conclusion (1)

According to the embodiment described above, the vibration sensor unit 5 includes the main body 6, the wire 7, and the vibration detection unit 821. The main body 6 is made of a magnetic material, and the main body 6 has an annular shape that allows the rotary shaft 32 to pass through. The wire 7 includes one coil portion 70 wound in a coil shape around the outer circumferential surface 60 of the main body 6. The rotary shaft 32 is made of a magnetic material having electrical conductivity and has an outer circumferential surface 322 having a cylindrical shape along the circumferential direction (the rotational direction) of the rotary shaft 32. The rotary shaft 32 is disposed inside the main body 6 so as to rotate in the circumferential direction of the main body 6 (the coil portion 70). The inner circumferential surface 61 of the main body 6 is disposed so as to be spaced apart from the outer circumferential surface 322 of the rotary shaft 32 and directly faces the outer circumferential surface 322. The vibration detection unit 821 detects vibration of the rotary shaft 32, based on a change in the alternating current component of voltage generated across the wire 7 (the coil portion 70). According to this configuration, when the rotary shaft 32 vibrates in the radial direction, the gap between the outer circumferential surface 322 of the rotary shaft 32 and the inner circumferential surface 61 of the main body 6 increases or decreases (changes) in an extremely short time. In this state, an induced electromotive force generated in the coil portion 70 changes, and an induced current (a vibration signal) corresponding to the induced electromotive force flows through the coil portion 70. The voltage of the induced current flowing through the coil portion 70 includes an alternating current component corresponding to the radial vibration, and the voltage value indicates the velocity of the radial vibration. The vibration detection unit 821 is capable of determining the presence or absence of vibration of the rotary shaft 32 and detecting the vibration by determining whether the voltage value of the vibration signal is equal to or greater than a predetermined threshold value, for example. The vibration detection unit 821 is capable of acquiring vibration information (period of vibration, acceleration, and amount of displacement) of the rotary shaft 32, based on the acquired rate of change of the voltage. In this way, the vibration sensor unit 5 does not detect vibration based on a physical strain (displacement) of the sensing unit caused by vibration, but detects vibration based on an electrical displacement using electromagnetic induction. Thus, in the vibration sensor unit 5, the transmission of the vibration of the rotary shaft 32 to the sensing portion itself is not required. Accordingly, the vibration sensor unit 5 is less likely to detect unintended vibration (vibration other than the vibration of the rotary shaft 32), and false detections caused by the unintended vibration and failures of the sensing portion caused by the vibration are also less likely to occur. The sensing portion is composed only of the coil (the coil portion 70) and the yoke (the main body 6). Thus, the sensing portion is usable over a wide temperature range from cryogenic temperatures to high temperatures and is also less likely to experience failures caused by temperature. Thus, according to the present invention, the vibration sensor unit 5 (the motor unit 3, the pump apparatus 1) that is usable over a wide temperature range and is less likely to experience failures caused by vibration and temperature can be provided.

According to the embodiment described above, the inner circumferential surface 61 of the main body 6 includes the first surface 66 having the first radius larger than the radius of the rotary shaft 32 and the end surfaces 64 and 65 in which the distance to the center of curvature of the first surface 66 is smaller than the first radius. In the circumferential direction of the main body 6 (the coil portion 70), the end surfaces 64 and 65 are disposed at positions spaced 90 degrees apart from each other. According to this configuration, the gap (the gaps G1 and G2) between each of the end surfaces 64 and 65 and the outer circumferential surface 322 is smaller than the gap between the first surface 66 and the outer circumferential surface 322. Thus, when the rotary shaft 32 vibrates in such a way as to approach the end surfaces 64 and 65 of the rotary shaft 32, the induced electromotive force is easily generated in the coil portion 70. Accordingly, the vibration detection sensitivity of the vibration detection unit 821 is improved as compared with the vibration detection sensitivity in a case where the main body 6 does not include the protruding portions 62 and 63.

According to the embodiment described above, the main body 6 includes the protruding portions 62 and 63 in which a portion of the inner circumferential surface 61 protrudes inward in the radial direction of the main body 6 (the coil portion 70). The end surface 64 is disposed on the protruding portion 62, and the end surface 65 is disposed on the protruding portion 63. According to this configuration, the vibration detection sensitivity of the vibration detection unit 821 is easily improved only by forming the protruding portions 62 and 63 on the inner circumferential surface 61.

According to the embodiment described above, the rotary shaft 32 includes the rear end surface 323 that is parallel to the radial direction of the rotary shaft 32 and is perpendicular to the outer circumferential surface 322 of the rotary shaft 32. The rotary shaft 32 is disposed inside the main body 6 so as to rotate in the circumferential direction of the main body 6 (the coil portion 70). The rear end surface 323 is disposed inside the main body 6. According to this configuration, the opposing area A1 increases when the rotary shaft 32 is displaced rearward, and the opposing area A1 decreases when the rotary shaft 32 is displaced forward. The magnetic flux passed through the rotary shaft 32 varies depending on an increase or decrease in the opposing area A1. Induced electromotive force generated in the coil portion 70 changes depending on the time change in the opposing area A1, and a current (a vibration signal) corresponding to the induced electromotive force flows through the coil portion 70. The voltage of the induced current flowing through the coil portion 70 includes an alternating current component corresponding to the thrust vibration, and the voltage value indicates the velocity of the thrust vibration. The vibration detection unit 821 is capable of determining the presence or absence of vibration of the rotary shaft 32 and detecting the vibration by determining whether the voltage value of the vibration signal is equal to or greater than a predetermined threshold value, for example. The vibration detection unit 821 is capable of acquiring vibration information (period of vibration, acceleration, and amount of displacement) of the rotary shaft 32, based on the acquired rate of change of the voltage. In this way, according to this configuration, the vibration sensor unit 5 is also capable of detecting the thrust vibration as well with the configuration for detecting the radial vibration.

According to the embodiment described above, the rotary shaft 32 is made of a magnetic material, and the power supply 81 is a constant-current DC power supply circuit that causes a constant-current DC to flow through the coil portion 70. According to this configuration, a magnetic field can be easily formed around the coil portion 70. The constant current flowing through the coil portion 70 causes stable magnetic flux to pass through the main body 6 and the rotary shaft 32 when the rotary shaft 32 does not vibrate, and causes a change in the magnetic flux corresponding to the vibration when the rotary shaft 32 vibrates. Induced electromotive force is generated in the coil portion 70, based on the change in the magnetic flux, and the vibration detection unit 821 is capable of detecting the vibration of the rotary shaft 32, based on the change in the alternating current component of the voltage generated in the wire 7 (the coil portion 70).

Pump Apparatus (2)

Next, another embodiment of the pump apparatus (hereinafter referred to as "second embodiment") will be described with a focus on differences from the embodiment described above (hereinafter referred to as "first embodiment "). The second embodiment differs from the first embodiment in the configuration of the vibration sensor unit. In the following description of the second embodiment, the same members and the members with a common function as in the first embodiment are indicated with the same reference signs as in the first embodiment for convenience of description unless otherwise specified, and description thereof will be omitted.

Configuration of Pump Apparatus (2)

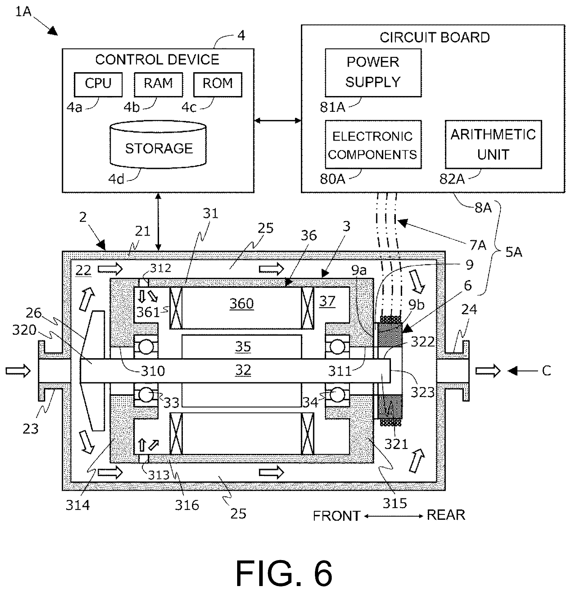

Fig. 6 is a schematic longitudinal sectional view of a pump apparatus illustrating the second embodiment of the pump apparatus. The figure illustrates the flow of pumped liquid with outlined arrows. The figure illustrates the pump apparatus 1A in a simplified manner for convenience of description.

The pump apparatus 1A is used for delivering pumped liquid (e.g., water). The pump apparatus 1A includes the pump unit 2, the motor unit 3, the control device 4, and a vibration sensor unit 5A.

Vibration Sensor Unit (2)

Configuration of Vibration Sensor Unit (2)

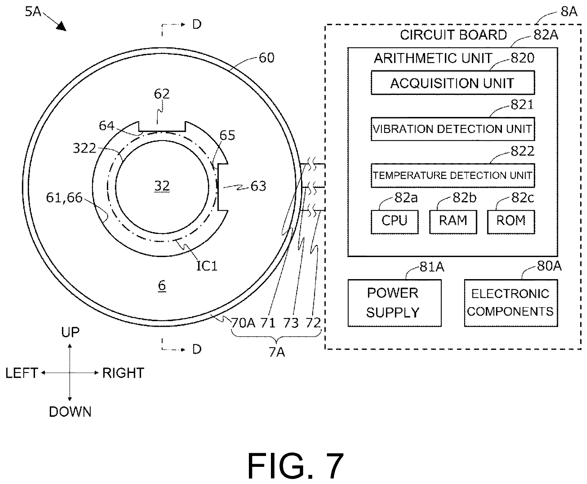

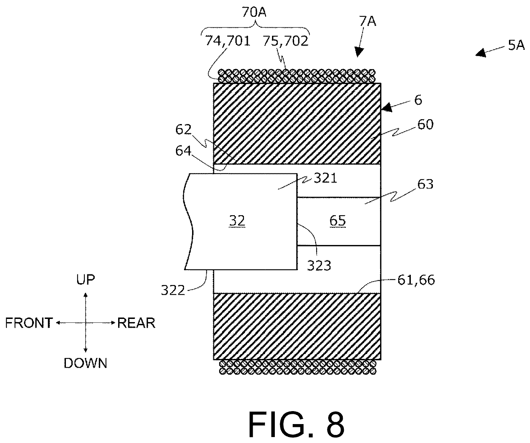

Fig. 7 is a schematic rear view of a part of the configuration of the vibration sensor unit 5A (the main body 6 and a wire 7A to be described later) as viewed in the direction of arrow C in Fig. 6. The figure illustrates a schematic rear view of the main body 6 and the wire 7A and a functional block diagram of the vibration sensor unit 5A. The figure also illustrates the rotary shaft 32 for convenience of description. Fig. 8 is a schematic longitudinal sectional view of the configuration (the main body 6 and the wire 7) illustrated in Fig. 7, taken along line D-D in Fig. 7. The figure also illustrates the rotary shaft 32 in a non-sectional view for convenience of description. In the following description, Fig. 6 will be referred to as appropriate.

The vibration sensor unit 5A includes the main body 6, the wire 7A, a circuit board 8A (electronic components 80A, a power source 81A, and an arithmetic unit 82A), and the spacer 9. The main body 6 and the wire 7A constitute the sensing portion that generates a signal (an induced current to be described later) corresponding to the vibration of the rotary shaft 32. The circuit board 8A (the electronic components 80A, the power supply 81A, and the arithmetic unit 82A) constitutes a signal processing unit that causes current to flow through the sensing portion, performs predetermined signal processing on the signal generated by the sensing portion, thereby detecting the vibration of the rotary shaft 32 and the temperature of the wire 7A. In the vibration sensor unit 5A, the configurations of the wire 7A and the circuit board 8A differ from those of the vibration sensor unit 5 of the first embodiment.

The main body 6 includes the outer circumferential surface 60, the inner circumferential surface 61, and two projecting portions 62 and 63.

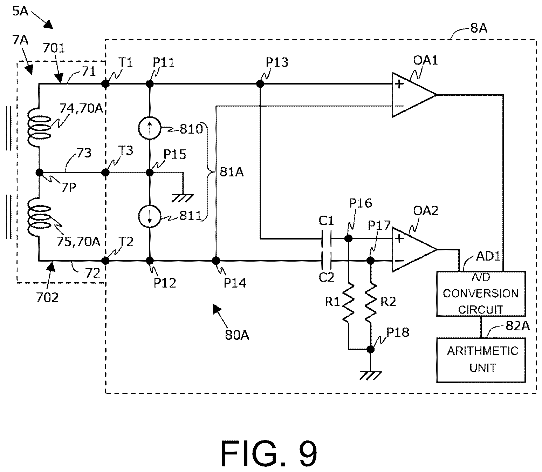

The wire 7A includes a coil portion 70A, two lead portions 71 and 72, and an intermediate lead portion 73. In the wire 7A, the coil portion 70A and the two lead portions 71 and 72 are formed of two types of wires 701 and 702. Specifically, a half of the coil portion 70A and the lead portion 71 are formed of the wire 701, and the other half of the coil portion 70A and the lead portion 72 are formed of the wire 702. The wire 702 is connected to the wire 701 at a connection point 7P (see Fig. 9, the same applies hereinafter) so as to form a single wire 7A together with the wire 701. The length of the wire 701 is the same as the length of the wire 702.

The wire 701 is a copper wire coated with a polyimide resin, for example. The wire 702 is a nickel wire coated with a polyimide resin, for example. That is, the wire 701 contains copper as a main component, and the wire 702 contains nickel as a main component. Copper is an example of a first metal in the present invention, and nickel is an example of a second metal in the present invention.

In the present invention, one of the wires 701 and 702 may be made of a metal having a relatively small temperature coefficient of resistance, and the other may be made of a metal having a relatively large temperature coefficient of resistance, and the main components of the wires 701 and 702 are not limited to copper and nickel.

A central portion of the wire 7 is wound in a coil shape around the outer circumferential surface 60 of the main body 6 and forms the coil portion 70A. In the coil portion 70A, a half of the coil portion 70A is a first coil portion 74 formed of the wire 701, and the other half of the coil portion 70A is a second coil portion 75 formed of the wire 702. That is, one of both end portions of the first coil portion 74 is the connection point 7P, and the other end portion is continuous with the lead portion 71. One of both end portions of the second coil portion 75 is the connection point 7P, and the other end portion is continuous with the lead portion 72. The first coil portion 74 is wound directly around the outer circumferential surface 60, and the second coil portion 75 is wound around the first coil portion 74. In other words, the coil portion 70A is doubly wound by the first coil portion 74 and the second coil portion 75. In the circumferential direction of the coil portion 70A, the first coil portion 74 is wound in the same direction as the second coil portion 75. In this way, the coil portion 70A includes the first coil portion 74 and the second coil portion 75.

The intermediate lead portion 73 is a copper wire coated with a polyimide resin, for example. The intermediate lead portion 73 is connected to the connection point 7P and is led out to the circuit board 8A via a terminal block or the like, similarly to the lead portions 71 and 72.

Note that, in the present invention, the intermediate lead portion 73 may be integrally formed with the wire 701 or the wire 702. In this case, the wire 701 or the wire 702 is connected to a boundary portion between the intermediate lead portion 73 and the first coil portion 74 or between the intermediate lead portion 73 and the second coil portion 75. Also in this configuration, the intermediate lead portion 73 is connected to the connection point 7P between the wires 701 and 702.

In the present invention, the coil portion 70A need not be doubly wound. That is, for example, in the front-rear direction, the first coil portion 74 may constitute the front half of the coil portion 70A, and the second coil portion 75 may constitute the rear half of the coil portion 70A.

Fig. 9 is a circuit configuration diagram of the vibration sensor unit 5A. In the following description, Figs. 6 to 8 will be referred to as appropriate.

The circuit board 8A is a known printed circuit board on which the electronic components 80A (capacitors C1 and C2, resistors R1 and R2, operational amplifiers OA1 and OA2, and the A/D conversion circuit AD1), the power supply 81A, and the arithmetic unit 82A are mounted. The circuit board 8A includes terminals T1 and T2, and a terminal T3 connected to the intermediate lead portion 73.

A non-inverting input of the operational amplifier OA1 is connected to the terminal T1, and an inverting input of the operational amplifier OA1 is connected to the terminal T2. A non-inverting input of the operational amplifier OA2 is connected to the terminal T1, and an inverting input of the operational amplifier OA2 is connected to the terminal T2 and the inverting input of the operational amplifier OA1 via a connection point P14. One end of the power supply 81A (a first power supply 810 to be described later) is connected between the terminal T1 (the lead portion 71) and each non-inverting input via a connection point P11. The other end of the power supply 81A (a second power supply 811 to be described later) is connected between the terminal T2 (the lead portion 72) and each inverting input via a connection point P12. The other end of the first power supply 810 and one end of the second power supply 811 are connected to the terminal T3 via a connection point P15 and are also grounded. The capacitor C1 is connected between one end of the power supply 81A and the non-inverting input of the operational amplifier OA1 via a connection point P13. The capacitor C2 is connected between the other end of the power supply 81A and the inverting input of the operational amplifier OA1 via the connection point 14. One end of the resistor R1 is connected between the capacitor C1 and the non-inverting input of the operational amplifier OA2 via a connection point P16. One end of the resistor R2 is connected between the capacitor C2 and the inverting input of the operational amplifier OA2 via a connection point P17. The other ends of the resistors R1 and R2 are grounded via a connection point P18.

The power supply 81A includes the first power supply 810 that causes a constant-current DC to flow through the first coil portion 74 and the second power supply 811 that causes a constant-current DC to flow through the second coil portion 75. The first power supply 810 and the second power supply 811 are known constant-current power supply circuits. The other ends of the first power supply 810 and the second power supply 811 are connected to the terminal T3 and are also grounded.

In the following description, the Fig. 7 is mainly referred to. The arithmetic unit 82A detects vibration of the rotary shaft 32, based on a change in alternating current components of the voltage generated in the coil portion 70A corresponding to the vibration of the rotary shaft 32. The arithmetic unit 82A includes, for example, a processor such as the CPU82a, a volatile memory such as the RAM82b that functions as a work area for the CPU82a, and a non-volatile memory such as the ROM82c that stores various types of operation information such as a detection program. The arithmetic unit 82A includes the acquisition unit 820, the vibration detection unit 821, and a temperature detection unit 822.

In the arithmetic unit 82A, a detection program for detecting the vibration of the rotary shaft 32 and the temperature of the coil portion 70A operates, and the detection program cooperates with the hardware resources of the vibration sensor unit 5A and detects the vibration of the rotary shaft 32 and the temperature of the coil portion 70A. By causing the processor (the CPU82a) included in the arithmetic unit 82A to execute the detection program, the detection program enables the processor to function as the acquisition unit 820, the vibration detection unit 821, and the temperature detection unit 822, thereby allowing the processor to execute the vibration detection method and the temperature detection method. Similarly, by causing the computer to execute the detection program, the detection program enables the computer to function as the arithmetic unit 82A.

The acquisition unit 820 acquires signals (a vibration signal and a temperature signal to be described later) converted into digital signals by the A/D conversion circuit AD1. A specific operation of the acquisition unit 820 will be described later.

The temperature detection unit 822 detects the temperature of the coil portion 70A, based on the signal (the temperature signal to be described later) acquired by the acquisition unit 820. The operation of the temperature detection unit 822 will be described later.

Principle of Vibration Detection

In the second embodiment, the first coil portion 74 and the second coil portion 75 are treated as one coil portion 70A, and the vibration is detected. That is, the vibration detection unit 821 detects the vibration of the rotary shaft 32, based on the induced electromotive force generated in the coil portion 70A, similarly to the first embodiment. Thus, details of the principle of vibration detection in the second embodiment will be omitted.

Principle of Temperature Detection

Next, the principle of temperature detection of the coil portion 70A in the vibration sensor unit 5A will be described. In the present embodiment, the vibration sensor unit 5A detects the temperature of the coil portion 70A (i.e., the ambient temperature of the coil portion 70A) by detecting the temperatures of the first coil portion 74

and the second coil portion 75. In the following description, Fig. 9 will be referred to as appropriate.

When a direct current from the first power supply 810 flows through the wire 701, a potential difference corresponding to the resistance value of the first coil portion 74 occurs across both end portions of the first coil portion 74 (the lead portion 71 and the intermediate lead portion 73). Similarly, when a direct current from the second power supply 811 flows through the wire 702, a potential difference corresponding to the resistance value of the second coil portion 75 occurs across both end portions of the second coil portion 75 (the lead portion 72 and the intermediate lead portion 73). Herein, the materials of the first coil portion 74 and the second coil portion 75 are known. The resistance values of the first coil portion 74 and the second coil portion 75 depend on the temperatures of the first coil portion 74 and the second coil portion 75, respectively. Thus, the temperatures of the first coil portion 74 and the second coil portion 75 can be derived from the resistance values of the first coil portion 74 and the second coil portion 75, respectively. The current flowing through the wires 701 and 702 is a constant current. Thus, the resistance value of the wire 701 (i.e., the first coil portion 74) can be derived from the voltage value of the current flowing through the wire 701, i.e., the potential difference across both end portions of the first coil portion 74. Similarly, the resistance value of the wire 702 (i.e., the second coil portion 75) can be derived from the voltage value of the current flowing through the wire 702, i.e., the potential difference across both end portions of the second coil portion 75. Thus, the temperature of the wire 701 can be detected based on the potential difference across both end portions of the first coil portion 74, and the temperature of the wire 702 can be detected based on the potential difference across both end portions of the second coil portion 75. In this way, in the pump apparatus 1A, the temperature of the coil section 70A can also be detected together with the vibration of the rotary shaft 32 without a dedicated component required for detecting the temperature of the coil section 70A. Herein, the current used for detecting the temperature is DC current from the power supply 81A.

Operation of Pump Apparatus (2)

Next, operations of the pump apparatus 1A will be described below with a focus on operations of the vibration sensor unit 5A. Among the operations of the pump apparatus 1A, the operation of vibration detection is the same as that of the pump apparatus 1 of the first embodiment. Thus, in the following description, the operation of the pump apparatus 1A is described with a focus on the temperature detection. In the following description, Figs. 6 to 9 are referred to as appropriate.

When the pump apparatus 1A is in operation, the rotary shaft 32 rotates together with the rotor 35. The power supply 81A causes a constant-current DC to flow through the wire 7A (the coil portion 70).

A voltage value of the constant current flowing through the wire 701, i.e., a potential difference across both end portions of the first coil portion 74, is input to a non-inverting input of the operational amplifier OA2, and a voltage value of the constant current flowing through the wire 702, i.e., a potential difference across both end portions of the second coil portion 75, is input to an inverting input of the operational amplifier OA2. The operational amplifier OA2 amplifies a differential value between the two voltage values (each potential difference across both end portions) and outputs, to the A/D conversion circuit AD1, a signal (hereinafter referred to as "temperature signal") indicating the differential value between the potential difference between both end portions of the first coil portion 74 and the potential difference between both end portions of the second coil portion 75. The temperature signal is converted into a digital signal in the A/D conversion circuit AD1, input to the arithmetic unit 82, and acquired by the acquisition unit 820.

A correlation between the differential value and the temperature is obtained in advance as a table or a function and stored in the ROM82c, for example. The temperature detection unit 822 detects the temperature of the coil portion 70A (i.e., the ambient temperature of the coil portion 70A), based on the temperature signal acquired by the acquisition unit 820 and the correlation stored in the ROM82c. The detected temperature is stored, for example, in the storage 4d.

Note that, in the present invention, the arithmetic unit 82A may include an information storage medium such as a flash memory, and the correlation and the detected temperature may be stored in the information storage medium.

Herein, the temperature of the coil portion 70 can also be detected only from the potential difference across both end portions of the first coil portion 74 or the potential difference across both end portions of the second coil portion 75. That is, even though the wire 7A is composed of one type of metal wire similarly to the wire 7 of the first embodiment, the temperature of the coil portion 70A can be detected. However, in general, the rate of change of the resistance value of a metal with respect to temperature tends to be extremely small in a cryogenic environment (e.g., in an environment where liquefied natural gas is transferred). Thus, when the wire 7A is composed of only one type of metal wire, the amount of change in temperature with respect to a change in the resistance value becomes large in a cryogenic environment, which may cause an error in the temperature detection result. Thus, in the second embodiment, two types of metal wires are used for the coil portion 70A, and the temperature detection unit 822 improves the accuracy of temperature detection in a cryogenic environment by utilizing the difference in the resistance values with respect to temperature between the two types of metal wires.

Conclusion (2)

According to the embodiment described above, the vibration sensor unit 5A includes the main body 6, the wire 7A, and the vibration detection unit 821. According to this configuration, in the vibration sensor unit 5A, the transmission of the vibration of the rotary shaft 32 to the sensing portion itself is not required, similarly to the vibration sensor unit 5 according to the first embodiment. Thus, the vibration sensor unit 5A is less likely to detect unintended vibration (vibration other than the vibration of the rotary shaft 32), and false detections caused by the unintended vibration and failures of the sensing portion caused by the vibration are also less likely to occur. The sensing portion is composed only of the coil (the coil portion 70A) and the yoke (the main body 6). Thus, the sensing portion is usable over a wide temperature range from cryogenic temperatures to high temperatures and is less likely to experience failures. Thus, according to the present invention, the vibration sensor unit 5A that is usable over a wide temperature range and is less likely to experience failures caused by vibration and temperature can be provided.

According to the embodiment described above, the inner circumferential surface 61 of the main body 6 includes the first surface 66 and the end surfaces 64 and 65. In the circumferential direction of the main body 6 (the coil portion 70A), the end surfaces 64 and 65 are disposed at positions spaced 90 degrees apart from each other. According to this configuration, the vibration detection sensitivity of the vibration detection unit 821 is improved as compared with the vibration detection sensitivity in a case where the main body 6 does not include the protruding portions 62 and 63.

According to the embodiment described above, the main body 6 includes the protruding portions 62 and 63. The end surface 64 is disposed on the protruding portion 62, and the end surface 65 is disposed on the protruding portion 63. According to this configuration, the vibration detection sensitivity of the vibration detection unit 821 can be easily performed only by forming the protruding portions 62 and 63 on the inner circumferential surface 61.

According to the embodiment described above, the rotary shaft 32 includes the rear end surface 323 disposed inside the main body 6. According to this configuration, the vibration sensor unit 5A is capable of detecting the thrust vibration as well with the configuration for detecting the radial vibration, similarly to the vibration sensor unit 5 according to the first embodiment.

According to the embodiment described above, the rotary shaft 32 is made of a magnetic material, and the power supply 81A is a constant-current DC power supply circuit that causes a constant-current DC to flow through the coil portion 70A. According to this configuration, induced electromotive force is generated in the coil portion 70A, based on the change in the magnetic flux, and the vibration detection unit 821 is capable of detecting the vibration of the rotary shaft 32, based on the change in the alternating current component of the voltage generated in the wire 7A (the coil portion 70A).

According to the embodiment described above, the vibration sensor unit 5A includes the temperature detection unit 822 that detects the temperature of the coil portion 70A, based on the potential difference across both end portions of the coil portion 70A. According to this configuration, the vibration sensor unit 5A is capable of detecting the temperature of the coil portion 70A by using the sensing portion that detects the vibration of the rotary shaft 32.

According to the embodiment described above, the wire 7A includes the intermediate lead portion 73, the first coil portion 74, and the second coil portion 75. The first coil portion 74 is a copper wire, and the second coil portion 75 is a nickel wire. The second coil portion 75 is wound in the same direction as the first coil portion 74 and is connected to the first coil portion 74 at the connection point 7P so as to be continuous with the first coil portion 74. The intermediate lead portion 73 is connected to the connection point 7P. The temperature detection unit 822 detects the temperature of the first coil portion 74 and the temperature of the second coil portion 75, based on the signal indicating the difference between the potential difference across both end portions of the first coil portion 74 and the potential difference across both end portions of the second coil portion 75 (i.e., the temperature signal). According to this configuration, the accuracy of temperature detection in a cryogenic environment is improved by utilizing the difference in the resistance values with respect to temperature between the two types of metal wires. As a result, the vibration sensor unit 5A can also be used to detect the temperature of the coil portion 70A over a wide temperature range up to a cryogenic environment.

Modification Example

Next, modification examples of the pump apparatuses 1 and 1A will be described below with a focus on differences from the first and second embodiments. In the following description of the modification example, the same members and the members with a common function as in the first and second embodiments are indicated with the same reference signs as in the first and second embodiments for convenience of description unless otherwise specified, and description thereof will be omitted. In the following modification examples, Figs. 2 to 6 will be referred to as appropriate.

First Modification Example

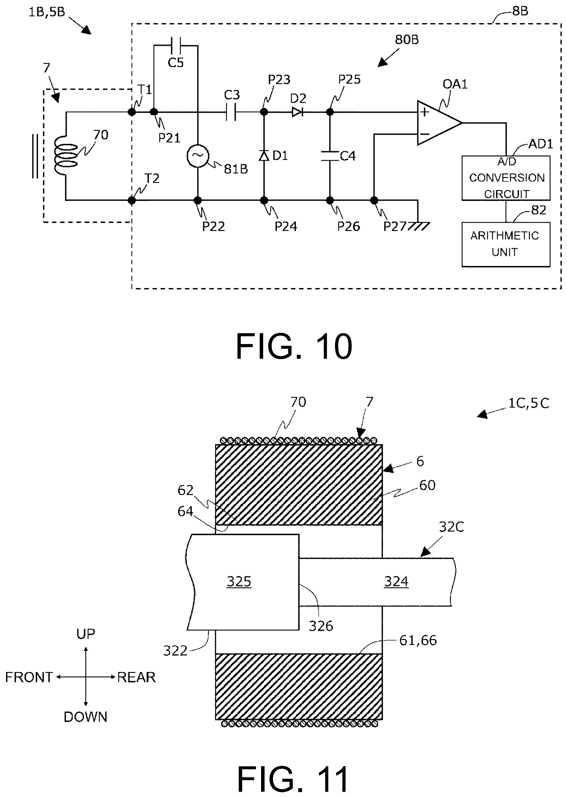

Fig. 10 is a circuit configuration diagram illustrating a first modification example of the pump apparatus. The figure illustrates the circuit configuration diagram of a vibration sensor unit 5B included in a pump apparatus 1B according to the first modification example. The pump apparatus 1B differs from the pump apparatus 1 of the first embodiment in a material of the rotary shaft 32, a configuration of the vibration sensor unit 5B (electronic components 80B included in the vibration sensor unit 5B), and a power supply 81B.

In the pump apparatus 1B, a rotary shaft 32 is made of a non-magnetic material having electrical conductivity. The vibration sensor unit 5B includes, as the electronic components 80B, a voltage doubler circuit including two capacitors C3 and C4 and two diodes D1 and D2, and a capacitor C5 connected between the power supply 81B and a terminal T1. In a circuit board 8B, each electronic component 80B, the power supply 81B, the terminals T1 and T2, and the operational amplifier OA1 are connected via corresponding connection points P21 to P27. Specifically, the voltage doubler circuit is mounted on the circuit board 8B and is connected between the power supply 81B and the operational amplifier OA1 via the connection points P21, P22, P25, and P26. In the voltage doubler circuit, the diode D1 is connected to the connection points P23 and P24, the diode D2 is connected to the connection points P23 and P25, the capacitor C3 is connected to the connection points P21 and P23, and the capacitor C4 is connected to the connection points P25 and P26. A non-inverting input of the operational amplifier OA1 is connected to the terminal T1, and an inverting input of the operational amplifier OA1 is connected to the terminal T2 via the connection point P27 and is also grounded. One end of the power supply 81B is connected between the terminal T1 and the non-inverting input via the connection point P21 and the capacitor C5. The other end of the power supply 81B is connected between the terminal T2 and the inverting input via the connection point P22. The power supply 81B is a constant current power supply circuit that causes a constant-current AC to flow through the wire 7. In this configuration, an eddy current is generated in the rotary shaft 32 by the constant current flowing through the coil portion 70. As a result, induced electromotive force is generated in the coil portion 70, based on a change in the distance between the rotary shaft 32 and the main body 6 (the protruding portions 62 and 63). The magnitude of the induced electromotive force is proportional to the widths of the gaps G1 and G2. In this way, the vibration sensor unit 5B is capable of detecting a change in the magnetic flux corresponding to the vibration and detecting the vibration of the rotary shaft 32 based on the change. The voltage of a signal generated in the coil portion 70 is rectified and doubled by the voltage doubler circuit. As a result, the detection accuracy of the vibration of the rotary shaft 32 by the vibration sensor unit 5B is improved.

Second Modification Example

Fig. 11 is a schematic longitudinal sectional view of a pump apparatus illustrating a second modification example of the pump apparatus. The figure illustrates a schematic longitudinal sectional view of a part of a configuration (the main body 6 and the wire 7) of a vibration sensor unit 5C included in the pump apparatus 1C according to the second modification example, similarly to Fig. 3. The figure illustrates a rotary shaft 32C included in the pump apparatus 1C in a non-sectional view for convenience of description. The pump apparatus 1C differs from the pump apparatus 1 of the first embodiment in the shape of the rotary shaft 32C.

In the pump apparatus 1C, the rotary shaft 32C includes a small diameter portion 324 and a large diameter portion 325. A rear portion of the rotary shaft 32C is reduced in diameter and forms the small diameter portion 324. A portion of the rotary shaft 32C forward of the small diameter portion 324 forms the large diameter portion 325. The outer diameter of the small diameter portion 324 is smaller than the outer diameter of the large diameter portion 325. A rear end surface 326 of the large diameter portion 325 is a ring plate-shaped surface that is parallel to the vertical and lateral directions, and is an end surface perpendicular to the outer circumferential surface 322 of the large diameter portion 325. The rotary shaft 32C extends through the main body 6. In the front-rear direction, the rear end surface 326 of the large diameter portion 325 is disposed at the center of the main body 6. The rear end surface 326 is an example of the end surface of the rotary shaft according to the present invention. In this configuration, the vibration sensor unit 5C detects the thrust vibration, based on the position of the rear end surface 326 instead of the rear end surface 323.

Note that, in the second modification example, the rotary shaft 32C extends through the main body 6, and thus the position of the main body 6 is not limited to being located rearward of the housing 31. That is, for example, the main body 6 may be accommodated in the housing 31. In this case, the rotary shaft 32C need not protrude rearward from the housing 31.

Third Modification Example

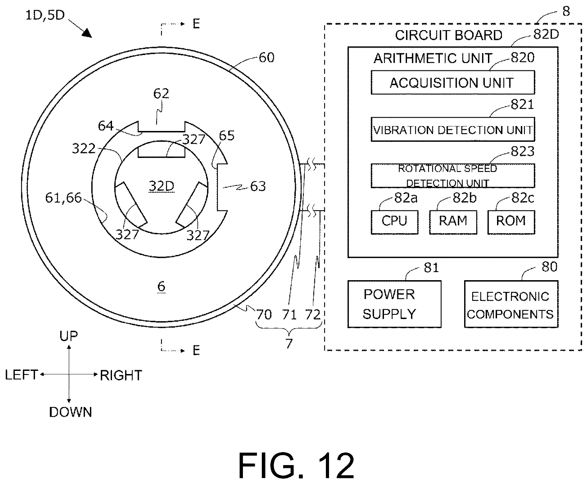

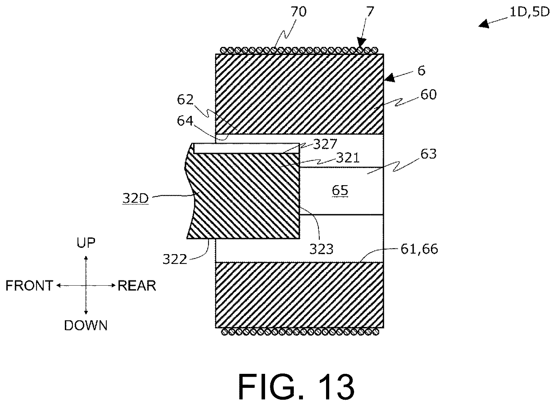

Fig. 12 is a schematic rear view of a pump apparatus illustrating a third modification example of the pump apparatus. The figure illustrates a schematic rear view of a part of a configuration (the main body 6 and the wire 7) of a vibration sensor unit 5D included in the pump apparatus 1D according to the third modification example, similarly to Fig. 2, and a functional block diagram of a signal processing unit. The figure also illustrates a rotary shaft 32D included in the pump apparatus 1D for convenience of description. Fig. 13 is a schematic longitudinal sectional view of the main body 6 and the wire 7 in Fig. 12, taken along line E-E in Fig. 12. The figure also illustrates the rotary shaft 32D in section for convenience of description. In the pump apparatus 1D, the shape of the rotary shaft 32D and the configuration of the vibration sensor unit 5D (an arithmetic unit 82D included in the vibration sensor unit 5D) differ from those of the pump apparatus 1 of the first embodiment.

In the pump apparatus 1D, the rotary shaft 32D includes a plurality of (three in the third modification example) recessed portions 327. In the radial direction of the rotary shaft 32D, a portion of the rear end portion 321 of the outer circumferential surface 322 of the rotary shaft 32D is recessed inward and forms the recess portion 327. The recess portion 327 has a rectangular groove shape along the axial direction of the rotary shaft 32D. In the circumferential direction of the rotary shaft 32D, the recessed portions 327 are disposed at equiangular intervals (at 120-degree intervals in the third modification example). The recess portions 327 are disposed inside the main body 6. The recess portion 327 is an example of a shaft recess portion in the present invention. The arithmetic unit 82D includes a rotational speed detection unit 823. The rotational speed detection unit 823 detects the rotational speed of the rotary shaft 32D, based on periodic variations in the voltage of the induced electromotive force generated in the coil portion 70 by each recess portion 327 periodically coming closest to the protruding portions 62 and 63 with the rotation of the rotary shaft 32D. In this configuration, the vibration sensor unit 5D is capable of detecting the rotational speed together with the vibration of the rotary shaft 32D without a dedicated component required for detecting the rotational speed.

Note that, in the third modification example, the rotary shaft 32D may include a convex portion that protrudes outward in the radial direction of the rotary shaft 32D instead of the recess portion 327. In this case, the protruding portion has a cuboid shape obtained by inverting the recess portion 327, for example. The convex portion is an example of a shaft protruding portion according the present invention.

In the third modification example, the number of recess portions 327 may be the same as the number of the protruding portion (62, 63).

Fourth Modification Example

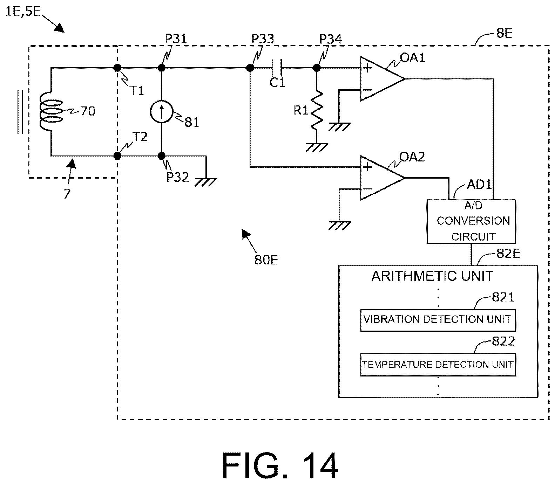

Fig. 14 is a circuit configuration diagram illustrating a fourth modification example of a pump apparatus. The figure illustrates a circuit configuration diagram of a vibration sensor unit 5E included in the pump apparatus 1E according to the fourth modification example. The pump apparatus 1E differs from the pump apparatus 1 of the first embodiment in that the vibration sensor unit 5E includes a configuration for detecting temperature of the coil portion 70.

In the pump apparatus 1E, the vibration sensor unit 5E includes the resistor R1 and the operational amplifier OA2 as electronic components 80E mounted on a circuit board 8E, and also includes an arithmetic unit 82E. One end of the power supply 81 is connected to the terminal T1, a non-inverting input of the operational amplifier OA1, and a non-inverting input of the operational amplifier OA2 via a connection point P31. The other end of the power supply 81 is connected to the terminal T2 via a connection point 32 and is also grounded. The capacitor C1 is connected between the non-inverting input of the operational amplifier OA1 and the non-inverting input of the operational amplifier OA2 via connection points P33 and P34. One end of the resistor R1 is connected between the capacitor C1 and the non-inverting input of the operational amplifier OA1 via the connection point P34, and the other end of the resistor R2 is grounded. Inverting inputs of the operational amplifiers OA1 and OA2 are grounded. The configuration of the arithmetic unit 82E is the same as the configuration of the arithmetic unit 82A of the second embodiment. In this configuration, the vibration detection unit 821 is capable of detecting the vibration of the rotary shaft 32, based on the induced electromotive force generated in the coil portion 70, similarly to the vibration sensor unit 5 of the first embodiment. The temperature detection unit 822 is capable of detecting the temperature of the coil portion 70, based on the potential difference across both end portions of the coil portion 70, similarly to the vibration sensor unit 5A. In the fourth modification example, the coil portion 70 is made of one type of metal wire. Thus, the accuracy of temperature detection of the vibration sensor unit 5E is lower than that of the vibration sensor unit 5A of the second embodiment in a cryogenic environment, but the accuracy of temperature detection of the vibration sensor unit 5E may approximate that of the vibration sensor unit 5A under other temperature conditions (particularly at or above ambient temperature).

Fifth Modification Example

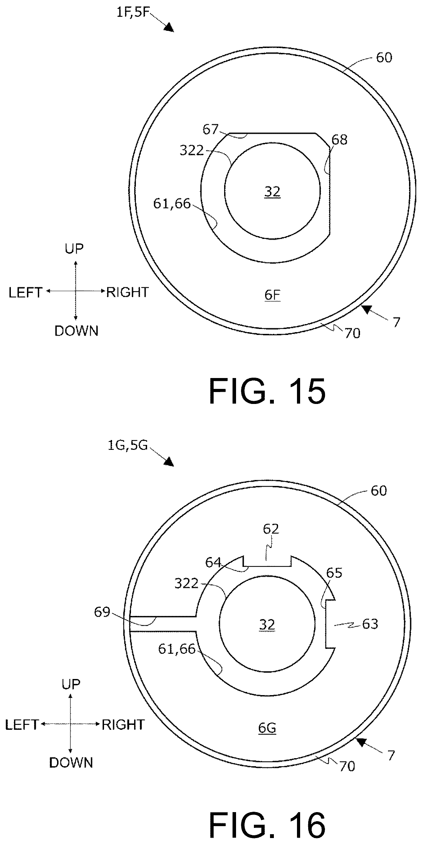

Fig. 15 is a schematic rear view of a pump apparatus illustrating a fifth modification example of the pump apparatus. The figure illustrates a schematic rear view of a part of the configuration (a main body 6F and the wire 7) of a vibration sensor unit 5F included in the pump apparatus 1F according to the fifth modification example, similarly to Fig. 2. The pump apparatus 1F differs from the pump apparatus 1 of the first embodiment in the shape of the inner circumferential surface 61 of the main body 6F.

When viewed in the front-rear direction, a portion of the inner circumferential surface 61 (an upper end portion in the fifth modification example) is formed in a planar shape so as to define a chord of a circle formed by the inner circumferential surface 61 and forms a planar portion 67 having the function equivalent to that of the end surface 64. Another portion of the inner circumferential surface 61 (a right end portion in the fifth modification example) is formed in a planar shape so as to define a chord of a circle formed by the inner circumferential surface 61 and forms a planar portion 68 having the function equivalent to that of the end surface 65. The planar surface portions 67 and 68 is an example of a second surface in the present invention. In this configuration, the vibration detection unit 821 is capable of detecting the vibration of the rotary shaft 32, based on the induced electromotive force generated in the coil portion 70, similarly to the vibration sensor unit 5 of the first embodiment.

Sixth Modification Example

Fig. 16 is a schematic rear view of a pump apparatus illustrating a sixth modification example of the pump apparatus. The figure illustrates a schematic rear view of a part of the configuration (a main body 6G and the wire 7) of a vibration sensor unit 5G included in the pump apparatus 1G according to the sixth modification example, similarly to Fig. 2. The pump apparatus 1G differs from the pump apparatus 1 of the first embodiment in the shape of the main body 6G.

When viewed in the front-rear direction, a portion of the main body 6G (a left portion in the sixth modification example) is cut out along the radial direction of the main body 6G, thereby forming a cutout portion 69. That is, when viewed from the rear, the main body 6 has a substantially C shape. Even in this configuration, the vibration detection unit 821 is capable of detecting the vibration of the rotary shaft 32, based on the induced electromotive force generated in the coil portion 70, similarly to the vibration sensor unit 5 of the first embodiment.

Seventh Modification Example

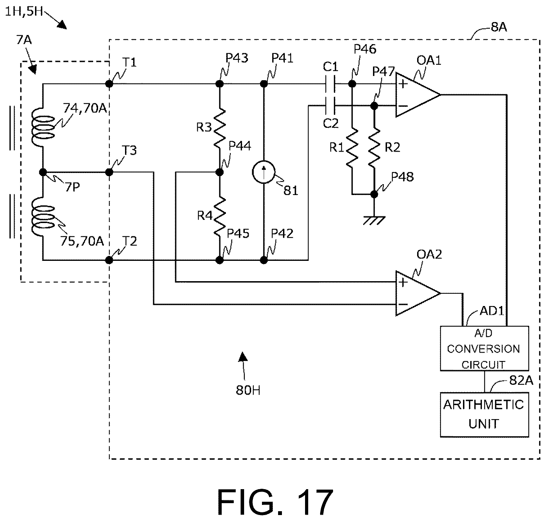

Fig. 17 is a circuit configuration diagram illustrating a seventh modification example of a pump apparatus. The figure illustrates a circuit configuration diagram of a vibration sensor unit 5H included in the pump apparatus 1H according to the seventh modification example. The pump apparatus 1H differs from the pump apparatus 1A of the second embodiment in a configuration of the vibration sensor unit 5H (electronic components 80H included in the vibration sensor unit 5H).

In the pump apparatus 1H, the vibration sensor unit 5H includes a so-called bridge circuit that uses two resistors R3 and R4 as the electronic components 80H. The vibration sensor unit 5H includes one power supply 81 similar to that of the first embodiment in place of the first power supply 810 and the second power supply 811 of the second embodiment. One end of the power supply 81 is connected to the terminal T1 and a non-inverting input of the operational amplifier OA1 via a connection point P41, and the other end of the power supply 81 is connected to the terminal T2 and an inverting input of the operational amplifier OA1 via a connection point P42. The resistors R3 and R4 are connected in parallel with the first coil portion 74 and the second coil portion 75 between the terminals T1 and T2 and the power supply 81. Specifically, one end of the resistor R3 is connected between the terminal T1 and one end of the power supply 81 via a connection point P43, and the other end of the resistor R3 is connected to one end of the resistor R4 via a connection point P44. The other end of the resistance R4 is connected between the terminal T2 and the other end of the power supply 81 via a connection point P45. The connection point 44 between the other end of the resistor R3 and the one end of the resistor R4 is connected to a non-inverting input of the operational amplifier OA2. The terminal T3 is connected to an inverting input of the operational amplifier OA2. One end of the resistor R1 is connected between the capacitor C1 and the non-inverting input of the operational amplifier OA1 via a connection point 46. One end of the resistor R2 is connected between the capacitor C2 and the inverting input of the operational amplifier OA1 via a connection point P47. The other ends of the resistors R1 and R2 are grounded via a connection point P48. In this configuration, the operational amplifier OA2 outputs, as a temperature signal, a signal indicating the ratio between the potential difference across both end portions of the first coil portion 74 and the potential difference across both end portions of the second coil portion 75 to the A/D conversion circuit AD1. The temperature signal is converted into a digital signal by the A/D conversion circuit AD1, input to the arithmetic unit 82A, and acquired by the acquisition unit 820.

The correlation between the ratio of the potential differences and the temperature is obtained in advance as a table or a function and stored in the ROM82c, for example. The temperature detection unit 822 detects the temperature of a coil section 70A, based on the temperature signal acquired by the acquisition unit 820 and the correlation stored in the ROM82c. The detected temperature is stored in the storage 4d, for example.

Eighth Modification Example

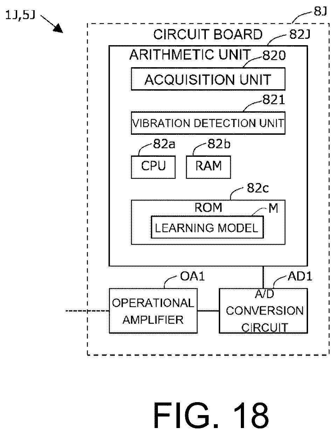

Fig. 18 is a functional block diagram illustrating an eighth modification example of a pump apparatus. The figure illustrates a functional block diagram of a part of a configuration of a vibration sensor unit 5J included in the pump apparatus 1J according to the eighth modification example. The pump apparatus 1J differs from the pump apparatus 1 of the first embodiment in that the vibration sensor unit 5J estimates the vibration of the rotary shaft 32 by using a learning model M.

The learning model M and an estimation program for estimating the amount of change in the vibration of the rotary shaft 32 by using the learning model M are stored in the ROM82c of an arithmetic unit 82J mounted on a circuit board 8J included in the vibration sensor unit 5J. The "learning model M" is a machine-learned model that has been trained in advance by using, for example, a known machine learning algorithm (e.g., a neural network) with, as input data, a change rate of voltage in a predetermined period obtained from a vibration signal output from the A/D conversion circuit AD1 and, as output data (training data), an amount of displacement of the vibration of the rotary shaft 32. That is, the learning model M is trained so as to output an amount of displacement of the vibration of the rotary shaft 32 when a change rate of voltage is input. The vibration detection unit 821 acquires the change rate of the voltage, based on the vibration signal in the predetermined period, and estimates the amount of change in the vibration of the rotary shaft 32 by using the learning model M. In this way, in the arithmetic unit 82J, the estimation program operates, and the estimation program cooperates with the hardware resources of the vibration sensor unit 5J and estimates the amount of change in the vibration of the rotary shaft 32. By causing the processor (the CPU82a) configuring the arithmetic unit 82J to execute the estimation program, the estimation program enables the processor to function as the acquisition unit 820 and the vibration detection unit 821 and enables the processor to execute a vibration estimation method. Similarly, by causing a computer to execute the estimation program, the estimation program enables the computer to function as the arithmetic unit 82J. In this configuration, the vibration sensor unit 5J is capable of easily estimating the amount of displacement of the vibration of the rotary shaft 32 without requiring complex computation.

In the eighth modification example, the vibration detection unit 821 may estimate an amount of wear of the rotary shaft 32 by using the learning model M. In this case, the learning model M is trained by using an amount of wear of the rotary shaft 32 as output data.

In the eighth modification example, the vibration sensor unit 5J may separately include a learning model storage that stores the learning model M. The learning model storage is, for example, an information storage medium such as flash memory.

Other Embodiments

Note that the configurations of the above-described embodiments and modification examples may be combined with one another.

In the embodiments described above, the main component of the wire (7, 7A) is not limited to copper or nickel.

In the embodiments described above, the main body 6 (the outer circumferential surface 60, the inner circumferential surface 61, the inscribed circle IC1) may be disposed in a non-concentric manner with the rotary shaft 32 as long as the main body 6 is disposed spaced apart from the rotary shaft 32 (the outer circumferential surface 322) disposed inside the main body 6. That is, when viewed from the rear, the center of the rotary shaft 32 may be deviated from the center of the main body 6 (the outer circumferential surface 60, the inner circumferential surface 61, the inscribed circle IC1). Even in this configuration, since the vibration detection unit 821 detects vibration of the rotary shaft 32, based on the induced electromotive force generated by the vibration of the rotary shaft 32, the influence on the vibration detection by the vibration detection unit 821 is small.

In the embodiments described above, the main body 6 may include "three" or more protruding portions.

That is, for example, the main body 6 may include three protruding portions disposed at equiangular intervals (120 degrees) in the circumferential direction of the main body 6.

In the embodiments described above, the position of the protruding portion 63 may be any position as long as it is not a position where the induced electromotive force caused by vibration of the rotary shaft 32 is canceled (i.e., a position rotated by 180 degrees from the protruding portion 62 along the circumferential direction of the main body 6 and a vicinity thereof), and is not limited to a position rotated by 90 degrees from the protruding portion 62.

In the embodiments described above, the position of the protruding portion 62 is not limited to the upper end portion of the inner circumferential surface 61, and the position of the protruding portion 63 is not limited to the right end portion of the inner circumferential surface 61.

In the embodiments described above, the shape of each of the end surfaces 64 and 65 is not limited to the planar shape. That is, for example, when viewed from the rear, the end surfaces 64 and 65 may each have a circular-arc shape that is concentric with the inner circumferential surface 61.

In the embodiments described above, the main body 6 need not have a complete annular shape. That is, for example, the main body 6 may have a shape in which a part of the annular shape is cut out (e.g., a C shape) as in the main body 6G in the sixth modification example. For example, the main body 6 may have a shape including any of the planar surface portions 67 or 68 in the seventh modification example (e.g., a shape in which the inner circumferential surface 61 has a substantially D-shaped form).

In the embodiments described above, the main body 6 may have an annular shape with no seam or may have an annular shape with a seam. That is, for example, the main body 6 may be configured of two semi-annular magnetic materials.

In the embodiments described above, the main body 6 is not required to include the protruding portions 62 and 63, although the vibration detection accuracy of the rotary shaft 32 decreases.

In the embodiments described above, the rotary shaft 32 may extend into the main body 6, and the rear end surface 323 of the rotary shaft 32 need not be disposed inside the main body 6. In this configuration, the vibration sensor unit (5, 5A) does not detect the thrust vibration. In this case, the main body 6 may be disposed so as to cover either the bearing 33 or the bearing 34 in the radial direction of the rotary shaft 32, for example.

In the embodiments described above, the rotary shaft 32 is made of a magnetic material having electrical conductivity. Alternatively, the rotary shaft 32 may be made of a material that is electrically conductive but has no magnetic properties (a non-magnetic material) as described in the first modification example. In this case, the power supply (81, 81A) causes a constant-current AC to flow through the wire (7, 7A). In this configuration, an eddy current is generated in the rotary shaft 32 by the constant current flowing through the coil portion 70. As a result, induced electromotive force is generated in the coil portion (70, 70A), based on a change in the distance between the rotary shaft 32 and the main body 6 (the protruding portions 62 and 63). The magnitude of the induced electromotive force is proportional to the widths of the gaps G1 and G2. Accordingly, the vibration sensor unit (5, 5A) is capable of detecting a change in the magnetic flux corresponding to the vibration and detecting the vibration of the rotary shaft 32 based on the change.

In the embodiments described above, the rotary shaft 32 may be made of a magnetic material (e.g., ferrite) having no electrical conductivity. Also in this configuration, the vibration sensor unit (5, 5A) is capable of detecting a change in the magnetic flux corresponding to the vibration and detecting the vibration of the rotary shaft 32 based on the change.

In the embodiments described above, when the power supply (81, 81A) is a DC power supply, as long as at least a portion of the rotary shaft 32 disposed inside the main body 6 (e.g., the portion protruding rearward from the rear wall 315) is made of a conductive material, the other portion may be made of an insulating material. That is, for example, a portion of the rotary shaft 32 located forward of the rear opening 311 may be made of an insulating material (e.g., ceramics, etc.,), and a portion protruding rearward from the rear opening 311 may be made of a conductive material.

In the embodiments described above, when the power supply (81, 81A) is a DC power supply, a portion of the rotary shaft 32 disposed inside the main body 6 (e.g., a portion protruding rearward from the rear wall 315) may be made of a magnetic material, and the other portion may be made of a non-magnetic material. Similarly, when the power supply (81, 81A) is an AC power supply, at least a portion of the rotary shaft 32 disposed inside the main body 6 may be made of a non-magnetic material having electrical conductivity, and the other portion may be made of a magnetic material.

In the embodiments described above, the inner circumferential surface 61 of the main body 6 directly faces the outer circumferential surface 322 of the rotary shaft 32. Alternatively, an object (e.g., a can of a canned motor pump, etc.,) may be disposed between the rotary shaft 32 and the main body 6.

In the embodiments described above, the vibration sensor unit (5, 5A) detects vibration of the rotary shaft 32 in the motor unit 3. Alternatively, the vibration sensor unit (5, 5A) is capable of detecting the vibration of a rotating body as long as the rotating body is made of a material having electrical conductivity.

In the embodiments described above, the control device 4 may function as the arithmetic unit (82, 82A).

In the embodiments described above, the pump apparatus (1, 1A) includes the sensor unit (5, 5A). Alternatively, the motor unit 3 may include the sensor unit (5, 5A).

In the embodiments and modification examples described above, various programs may be stored in a non-transitory storage medium in an installable file format or an executable file format, such as a compact disc (CD), a digital versatile disc (DVD), or a universal serial bus (USB) memory, and may be supplied to the vibration sensor unit (5 to 5J) via a dedicated reading medium.

Aspects of the Present Invention

Next, aspects of the present invention conceived from the embodiments described above will be described below with reference to the terms and reference signs described in the embodiments.

A first aspect of the present invention is a vibration sensor unit (e.g., the vibration sensor unit 5 to 5J) that detects vibration of a rotary shaft (e.g., the rotary shaft 32, 32C, 32D) of a rotary electric machine (e.g., the motor unit 3), the vibration sensor unit including a wire (e.g., the wire 7, 7A) having at least one coil portion (e.g., the coil portion 70, 70A) wound in a circular coil shape, a main body (e.g., the main body 6, 6F, 6G) made of a magnetic material and disposed inside the coil portion in contact with the coil portion, a power supply (e.g., the power supply 81, 81A, 81B, the first power supply 810, the second power supply 811) configured to cause a constant current to flow through the coil portion, and a vibration detection unit (e.g., the vibration detection unit 821) that detects the vibration, based on a change in an alternating current component of voltage generated across the wire, in which the rotary shaft includes a cylindrical outer circumferential surface (e.g., the outer circumferential surface 60) along a rotating direction of the rotary shaft, the main body has an annular shape or a shape in which a portion of the annular shape is cut out, the shapes along a circumferential direction of the coil portion and being formed to allow the rotary shaft to pass through, and, when the rotary shaft is disposed inside the main body so as to rotate in the circumferential direction of the coil portion, a portion of the rotary shaft disposed inside the main body is made of a material having at least electrical conductivity or magnetism, and an inner circumferential surface (e.g., the inner circumferential surface 61) of the main body is disposed spaced apart from the outer circumferential surface of the rotary shaft. According to this configuration, a vibration sensor unit that is usable over a wide temperature range and is less likely to experience failures caused by vibration and temperature can be provided.

A second aspect of the present invention is the vibration sensor unit in the first aspect, in which the inner circumferential surface of the main body includes a first surface (e.g., the first surface 66) having a first radius larger than a radius of the rotary shaft, and at least one second surface (e.g., the end surface 64, 65, the planar portion 67, 68) having a distance to a center of curvature of the first surface smaller than the first radius. According to this configuration, the vibration detection sensitivity of the vibration detection unit is improved as compared with the vibration detection sensitivity in a case where the main body does not include a protruding portion.

A third aspect of the present invention is the vibration sensor unit in the second aspect, in which the inner circumferential surface of the main body includes a plurality of the second surfaces disposed at different positions in the circumferential direction of the coil portion. According to this configuration, the vibration detection sensitivity of the vibration detection unit is further improved.

A fourth aspect of the present invention is the vibration sensor unit in the second aspect, in which the main body includes a protruding portion (e.g., the protruding portion 62, 63) in which a portion of the inner circumferential surface protrudes inward in a radial direction of the coil portion, and the second surface (e.g., the end surface 64, 65) is disposed on the protruding portion. According to this configuration, the vibration detection sensitivity of the vibration detection unit is easily improved only by forming the protruding portion on the inner circumferential surface.

A fifth aspect of the present invention is the vibration sensor unit in the first aspect, in which the rotary shaft includes an end surface (e.g., the rear end surface 323, 326) parallel to a radial direction of the rotary shaft and perpendicular to the outer circumferential surface of the rotary shaft, and when the rotary shaft is disposed inside the main body so as to rotate in the circumferential direction of the coil portion, the end surface is disposed inside the main body. According to this configuration, the vibration sensor unit is capable of detecting the thrust vibration as well with the configuration for detecting the radial vibration.

A sixth aspect of the present invention is the vibration sensor unit (e.g., the vibration sensor unit 5D) in the first aspect, in which the rotary shaft (e.g., the rotary shaft 32D) includes a shaft protruding portion (e.g., the convex portion) in which a portion of the outer circumferential surface protrudes outward or a shaft recess portion (e.g., the recess portion 327) in which a portion of the outer circumferential surface is recessed inward in a radial direction of the rotary shaft, and, when the rotary shaft is disposed inside the main body so as to rotate in the circumferential direction of the coil portion, the shaft protruding portion or the shaft recess portion is disposed inside the main body. According to this configuration, the vibration sensor unit is capable of detecting the rotational speed together with the vibration of the rotary shaft without a dedicated component required for detecting the rotational speed.

A seventh aspect of the present invention is the vibration sensor unit in the first aspect, in which the power supply is a DC power supply (e.g., the power supply 81, 81A, the first power supply 810, the second power supply 811) that causes the constant-current DC to flow through the coil portion when a portion of the rotary shaft disposed inside the main body is made of a magnetic material, or the power supply is an AC power supply (e.g., the power supply 81B) that causes the constant-current AC to flow through the coil portion when the portion of the rotary shaft disposed inside the main body is made of a non-magnetic material having electrical conductivity. According to this configuration, a magnetic field can be easily formed around the coil portion. An eddy current is generated in the rotary shaft made of a non-magnetic material. As a result, the vibration sensor unit is capable of detecting a change in the magnetic flux corresponding to the vibration.

An eighth aspect of the present invention is the vibration sensor unit (e.g., the vibration sensor unit 5A, 5E, 5H) in any one of the first to seventh aspects, further including a temperature detection unit (e.g., the temperature detection unit 822) that detects temperature of the coil portion, based on a potential difference across both end portions of the coil portion. According to this configuration, the vibration sensor unit is capable of detecting the temperature of the coil portion by using a sensing portion that detects the vibration of the rotary shaft.

A ninth aspect of the present invention is the vibration sensor unit (e.g., the vibration sensor unit 5A, 5H) in the eighth aspect, in which the wire (e.g., the wire 7A) includes the two coil portions and an intermediate lead portion (e.g., the intermediate lead portion 73) connected to each of the two coil portions, one of the two coil portions is a first coil portion (e.g., the first coil portion 74) containing a first metal as a main component, the other of the two coil portions is a second coil portion (e.g., the second coil portion 75) containing a second metal different from the first metal as a main component, in the circumferential direction of the coil portion, the second coil portion is wound in the same direction as the first coil portion and is connected to the first coil portion at a connection point (e.g., the connection point 7P) in such a way as to be continuous with the first coil portion, the intermediate lead portion is connected to the connection point, and the temperature detection unit detects temperature of the two coil portions, based on a potential difference across both end portions of the first coil portion and a potential difference across both end portions of the second coil portion. According to this configuration, the vibration sensor unit can also be used for detecting the temperature of the coil portion over a wide temperature range up to a cryogenic environment.

A tenth aspect of the present invention is the vibration sensor unit (e.g., the vibration sensor unit 5J) in the first aspect further including an acquisition unit (e.g., the acquisition unit 820) that acquires a signal (e.g., the vibration signal) including an alternating current component, and a storage (e.g., the ROM82c) that stores a learning model (e.g., the learning model M) trained to output an amount of displacement of the vibration when a rate of change of the voltage acquired based on a change in the alternating current component is input, in which the vibration detection unit acquires the rate of change, based on a signal indicating the change in the alternating current component, and estimates the amount of displacement by inputting the acquired rate of change into the learning model. According to this configuration, the vibration sensor unit is capable of easily estimating the amount of displacement of the vibration of the rotary shaft.

A eleventh aspect of the present invention is a rotary electric machine (e.g., the motor unit 3) including a rotor (e.g., the rotor 35), a stator (e.g., the stator 36) that accommodates the rotor and causes the rotor to rotate, a rotary shaft (e.g., the rotary shaft 32, 32C, 32D) that rotates together with the rotor, bearings (e.g., the bearings 33 and 34) that support the rotary shaft, and a vibration sensor unit (e.g., the vibration sensor unit 5 to 5J) that detects vibration of the rotary shaft, in which the vibration sensor unit includes a wire (e.g., the wire 7, 7A) having a coil portion (e.g., the coil portion 70) wound in a circular coil shape, a main body (e.g., the main body 6, 6F, 6G) made of a magnetic material and disposed inside the coil portion in contact with the coil portion, a power supply (e.g., the power supply 81, 81A, the first power supply 810, the second power supply 811) configured to cause a constant current to flow through the coil portion, and a vibration detection unit (e.g., the vibration detection unit 821) that detects the vibration, based on a change in an alternating current component of voltage generated across the wire, in which the main body has an annular shape or a shape in which a portion of the annular shape is cut out, the shapes along a circumferential direction of the coil portion and being formed to allow the rotary shaft to pass through, the rotary shaft is disposed inside the main body so as to rotate in the circumferential direction of the coil portion and includes a cylindrical outer circumferential surface (e.g., the outer circumferential surface 322) along a rotating direction of the rotary shaft, a portion of the rotary shaft disposed inside the main body is made of a material having at least electrical conductivity or magnetism, and an inner circumferential surface of the main body is disposed spaced apart from the outer circumferential surface of the rotary shaft. According to this configuration, a rotary electric machine including the vibration sensor unit that is usable over a wide temperature range and is less likely to experience failures caused by vibration and temperature can be provided.

A twelfth aspect of the present invention is a pump apparatus (e.g., the pump apparatus 1 to 1J) including an impeller (e.g., the impeller 26) and the rotary electric machine according to the eleventh aspect (e.g., the motor unit 3) that causes the impeller to rotate. According to this configuration, a pump apparatus including the vibration sensor unit that is usable over a wide temperature range and is less likely to experience failures caused by vibration and temperature can be provided.

[Reference signs List]

**Claims**

1. A vibration sensor unit configured to detect vibration of a rotary shaft of a rotary electric machine, the vibration sensor unit comprising:

1 Pump apparatus
3 Motor unit (Rotary electric machine)
32 Rotary shaft
321 Rear end portion
322 Outer circumferential surface
323 Rear end surface (End surface)
5 Vibration sensor unit
6 Main body
60 Outer circumferential surface
61 Inner circumferential surface
62 Protruding portion
63 Protruding portion
64 End surface (Second surface)
65 End surface (Second surface)
66 First surface
7 Wire
70 Coil portion
81 Power supply
821 Vibration detection unit
1A Pump apparatus
5A Vibration sensor unit
7A Wire
73 Intermediate lead portion
74 First coil portion
75 Second coil portion
810 First power supply (Power supply)
811 Second power supply (Power supply)
822 Temperature detection unit
1B Pump apparatus
5B Vibration sensor unit
81B Power supply
1C Pump apparatus
32C Rotary shaft
326 Rear end surface (End surface)
1D Pump apparatus
32D Rotary shaft
327 Recess portion (Shaft recess portion)
5D Vibration sensor unit
823 Rotational speed detection unit
1E Pump apparatus
5E Vibration sensor unit
1F Pump apparatus
6F Main body
67 Planar portion (Second surface)
68 Planar portion (Second surface)
1G Pump apparatus
6G Main body
69 Cutout portion
1H Pump apparatus
5H Vibration sensor unit
1J Pump apparatus
5J Vibration sensor unit

a wire having at least one coil portion wound in a circular coil shape;
a main body made of a magnetic material and disposed inside the coil portion in contact with the coil portion;
a power supply configured to cause a constant current to flow through the coil portion; and
a vibration detection unit configured to detect the vibration, based on a change in an alternating current component of voltage generated across the wire, wherein
the rotary shaft includes a cylindrical outer circumferential surface along a rotating direction of the rotary shaft,
the main body has an annular shape or a shape in which a portion of the annular shape is cut out, the shapes along a circumferential direction of the coil portion and being formed to allow the rotary shaft to pass through, and,
when the rotary shaft is disposed inside the main body and is configured to rotate in the circumferential direction of the coil portion,

a portion of the rotary shaft disposed inside the main body is made of a material having at least electrical conductivity or magnetism, and
an inner circumferential surface of the main body is disposed spaced apart from the outer circumferential surface of the rotary shaft.

2. The vibration sensor unit according to claim 1, wherein
the inner circumferential surface of the main body includes

a first surface having a first radius larger than a radius of the rotary shaft, and
at least one second surface having a distance to a center of curvature of the first surface smaller than the first radius.

3. The vibration sensor unit according to claim 2, wherein the inner circumferential surface of the main body includes a plurality of the second surfaces disposed at different positions in the circumferential direction of the coil portion.

4. The vibration sensor unit according to claim 2, wherein

the main body includes at least one protruding portion in which a portion of the inner circumferential surface protrudes inward in a radial direction of the coil portion, and
the second surface is disposed on the protruding portion.

5. The vibration sensor unit according to claim 1, wherein

the rotary shaft includes an end surface parallel to a radial direction of the rotary shaft and perpendicular to the outer circumferential surface of the rotary shaft, and,
when the rotary shaft is disposed inside the main body and is configured to rotate in the circumferential direction of the coil portion, the end surface is disposed inside the main body.

6. The vibration sensor unit according to claim 1, wherein

the rotary shaft includes a shaft protruding portion in which a portion of the outer circumferential surface protrudes outward or a shaft recess portion in which a portion of the outer circumferential surface is recessed inward in a radial direction of the rotary shaft, and,
when the rotary shaft is disposed inside the main body and is configured to rotate in the circumferential direction of the coil portion, the shaft protruding portion or the shaft recess portion is disposed inside the main body.

7. The vibration sensor unit according to claim 1, wherein

the power supply is a DC power supply that causes the constant-current DC to flow through the coil portion when a portion of the rotary shaft disposed inside the main body is made of a magnetic material, or
the power supply is an AC power supply that causes the constant-current AC to flow through the coil portion when the portion of the rotary shaft disposed inside the main body is made of a non-magnetic material having electrical conductivity.

8. The vibration sensor unit according to any one of claims 1 to 7, further comprising a temperature detection unit configured to detect temperature of the coil portion, based on a potential difference across both end portions of the coil portion.

9. The vibration sensor unit according to claim 8, wherein

the wire includes the two coil portions and an intermediate lead portion connected to each of the two coil portions,
one of the two coil portions is a first coil portion containing a first metal as a main component,
the other of the two coil portions is a second coil portion containing a second metal different from the first metal as a main component,
in the circumferential direction of the coil portion, the second coil portion is wound in the same direction as the first coil portion and is connected to the first coil portion at a connection point in such a way as to be continuous with the first coil portion,
the intermediate lead portion is connected to the connection point, and
the temperature detection unit is configured to detect temperature of the two coil portions, based on a potential difference across both end portions of the first coil portion and a potential difference across both end portions of the second coil portion.

10. The vibration sensor unit according to claim 1, further comprising:

an acquisition unit configured to acquire a signal including an alternating current component; and
a storage that stores a learning model trained to output an amount of displacement of the vibration when a rate of change of the voltage acquired based on a change in the alternating current component is input, wherein
the vibration detection unit

acquires the rate of change, based on a signal indicating the change in the alternating current component, and
estimates the amount of displacement by inputting the acquired rate of change into the learning model.

11. A rotary electric machine comprising:

a rotor;
a stator that accommodates the rotor and is configured to cause the rotor to rotate;
a rotary shaft that rotates together with the rotor;
bearings that support the rotary shaft; and
a vibration sensor unit configured to detect vibration of the rotary shaft, wherein
the vibration sensor unit includes

a wire having a coil portion wound in a circular coil shape,
a main body made of a magnetic material and disposed inside the coil portion in contact with the coil portion,

a power supply configured to cause a constant current to flow through the coil portion, and

a vibration detection unit configured to detect the vibration, based on a change in an alternating current component of voltage generated across the wire, wherein

the main body has an annular shape or a shape in which a portion of the annular shape is cut out, the shapes along a circumferential direction of the coil portion and being formed to allow the rotary shaft to pass through,

the rotary shaft is disposed inside the main body and is configured to rotate in the circumferential direction of the coil portion, and includes a cylindrical outer circumferential surface along a rotating direction of the rotary shaft,

a portion of the rotary shaft disposed inside the main body is made of a material having at least electrical conductivity or magnetism, and

an inner circumferential surface of the main body is disposed spaced apart from the outer circumferential surface of the rotary shaft.

12. A pump apparatus comprising:

an impeller; and
the rotary electric machine according to claim 11 that is configured to cause the impeller to rotate.

FIG. 1

FIG. 2

FIG. 3

FIG. 4

FIG. 5A

FIG.5B

1A

**CONTROL DEVICE** 4

| CPU | RAM | ROM |
| 4a | 4b | 4c |

STORAGE
4d

**CIRCUIT BOARD**

POWER
SUPPLY
81A

ELECTRONIC
COMPONENTS
80A

ARITHMETIC
UNIT
82A

8A

2
21
31
25
36
3
9a
7A
5A
22
312
9
6
26
360
37
9b
320
361
24
310
35
322
C
311
32
310
311
323
33
34
321
314
313
316
315
25

FRONT ⟷ REAR

# FIG. 6

FIG. 7

FIG. 8

FIG. 9

FIG. 10

FIG. 11

1D,5D

→ E

60

62

64

322

327

65

32D

63

61,66

327

327

6

UP

LEFT ← → RIGHT

DOWN

→ E

70 71 72

7

8

CIRCUIT BOARD 82D

ARITHMETIC UNIT 820

ACQUISITION UNIT

821

VIBRATION DETECTION UNIT

823

ROTATIONAL SPEED
DETECTION UNIT

82a 82b 82c

CPU RAM ROM

81

POWER
SUPPLY

80

ELECTRONIC
COMPONENTS

# FIG. 12

FIG. 13

FIG. 14

FIG. 15

FIG. 16

FIG. 17

FIG. 18

## INTERNATIONAL SEARCH REPORT

| International application No. |
| --- |
| **PCT/JP2024/021973** |

**A. CLASSIFICATION OF SUBJECT MATTER**

*G01M 13/045*(2019.01)i; *H02K 11/25*(2016.01)i
FI:   G01M13/045; H02K11/25

According to International Patent Classification (IPC) or to both national classification and IPC

**B. FIELDS SEARCHED**

Minimum documentation searched (classification system followed by classification symbols)

G01M13/045; H02K11/25

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 11-148819 A (NIKKISO CO., LTD.) 02 June 1999 (1999-06-02)<br>entire text | 1-12 |
| A | US 4924180 A (LIQUIFLO EQUIPMENT COMPANY) 08 May 1990 (1990-05-08)<br>entire text | 1-12 |
| A | JP 52-125704 A (NIPPON STEEL CORP.) 21 October 1977 (1977-10-21)<br>entire text | 1-12 |
| A | CN 105804981 A (ZHEJIANG ERG TECH INC.) 27 July 2016 (2016-07-27)<br>entire text | 1-12 |
| A | JP 6-307919 A (TOSHIBA ENGINEERING CO.) 04 November 1994 (1994-11-04)<br>entire text | 1-12 |

☐ Further documents are listed in the continuation of Box C.      ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 July 2024** | **30 July 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/021973**

| Patent document cited in search report | | | Publication date (day/month/year) | Patent family member(s) | Publication date (day/month/year) |
|---|---|---|---|---|---|
| JP | 11-148819 | A | 02 June 1999 | (Family: none) | |
| US | 4924180 | A | 08 May 1990 | (Family: none) | |
| JP | 52-125704 | A | 21 October 1977 | (Family: none) | |
| CN | 105804981 | A | 27 July 2016 | (Family: none) | |
| JP | 6-307919 | A | 04 November 1994 | (Family: none) | |

Form PCT/ISA/210 (patent family annex) (July 2022)

**REFERENCES CITED IN THE DESCRIPTION**

**Patent documents cited in the description**

- JP 2017053837 A